# EUROPÄISCHE PATENTSCHRIFT

(11) **EP 3 869 396 B1**
(45) Veröffentlichungstag und Bekanntmachung des Hinweises auf die Patenterteilung: **23.04.2025**
(21) Anmeldenummer: 21158036.0
(22) Anmeldetag: 19.02.2021
(51) Int. Cl.: G08G 1/017, G06V 20/52, G08G 1/04, G08G 1/048, G08G 1/054

(54) **VERFAHREN UND SYSTEM ZUR KORREKTUR EINES KENNZEICHENS**
METHOD AND SYSTEM FOR ADJUSTING A LABEL
PROCÉDÉ ET SYSTÈME DE CORRECTION D'UNE CARACTÉRISTIQUE

(30) Priorität: 24.02.2020 EP 20000085
(43) Veröffentlichungstag der Anmeldung: 25.08.2021
(73) Patentinhaber: Toll Collect GmbH, 10785 Berlin (DE)
(72) Erfinder: Schach, Christian, 16761 Henningsdorf (DE); Viveros, Daniel Sanchez, 13585 Berlin (DE)

(56) Entgegenhaltungen:
- EP-A1- 2 320 384
- EP-A1- 2 360 647
- EP-A1- 2 469 497
- EP-A1- 2 887 333

## Beschreibung

Die Offenbarung betrifft ein Verfahren und ein System zur Korrektur eines Kfz-Kennzeichens (Kfz - Kraftfahrzeug).

### Hintergrund

Automatisierte Texterkennung (oder optische Zeichenerkennung, OCR - optical character recognition) innerhalb von Bildern ist bekannt. Texterkennung wird üblicherweise auf eine Rastergrafik angewendet, um Zeichen wie Buchstaben oder Zahlen zu identifizieren. Sie wird beispielsweise im Verkehrswesen eingesetzt, um in Fotos von Fahrzeugen das jeweilige Kennzeichen zu ermitteln und eine automatisierte Auswertung der Kennzeichen zu ermöglichen, beispielsweise in einem Mautsystem oder bei Geschwindigkeitskontrollen. In einem Mautsystem kann mittels einer Erkennung von Kennzeichen geprüft werden, ob das betreffende Fahrzeug für die Benutzung der Straße berechtigt ist und die entsprechende Mautgebühr ordnungsgemäß gezahlt wird. Die Texterkennung ist jedoch manchmal fehleranfällig. Insbesondere bei Kennzeichen können ungünstige Lichtverhältnissen bei der Aufnahme des Fahrzeugs, eine Verschmutzung des Kennzeichens oder eine Beschädigung des Kennzeichens zu fehlerhaften Resultaten bei einer automatischen Erkennung des Kennzeichens führen.

Das Dokument WO 2009/074436 A1 offenbart ein Verfahren und eine Vorrichtung zur Erfassung einer Geschwindigkeitsübertretung eines Fahrzeugs. Zu einem ersten Zeitpunkt wird das Kennzeichen eines in eine Überwachungsstrecke einfahrendes Fahrzeug erfasst und mit einer optischen Kennzeichenerkennung automatisch ermittelt. Mittels eines Einweg-Verschlüsselungsverfahrens wird ein dem Fahrzeugmerkmal zuordenbarer erster Kodierwert ermittelt. Zu einem zweiten Zeitpunkt wird das Fahrzeugmerkmal eines die Überwachungsstrecke verlassenden Fahrzeugs erfasst und wiederum mit einer optischen Kennzeichenerkennung automatisch ermittelt. Mittels des Einweg-Verschlüsselungsverfahrens wird ein dem zum zweiten Zeitpunkt erfassten Fahrzeugmerkmal zuordenbarer zweiter Kodierwert ermittelt. Der erste und der zweite Kodierwert werden miteinander verglichen. Bei einer Übereinstimmung des ersten und des zweiten Kodierwerts wird eine Durchschnittsgeschwindigkeit des Fahrzeugs anhand der zum Zurücklegen der Überwachungsstrecke benötigten Zeitspanne ermittelt. Die Durchschnittsgeschwindigkeit wird mit einer vorgegebenen Maximalgeschwindigkeit verglichen und nur bei einer festgestellten Überschreitung der Maximalgeschwindigkeit durch die Durchschnittsgeschwindigkeit wird das Fahrzeugmerkmal gespeichert.

Das Dokument EP 2 779 138 A1 offenbart ein Verfahren zum Lesen von Fahrzeug-Kennzeichen mittels OCR in einem Straßennetz. Das Verfahren umfasst: Bildaufnehmen eines Fahrzeug-Kennzeichens an einem ersten Ort im Straßennetz, OCR-Lesen einer Kennzeichen-Zeichenkette in der Bildaufnahme und Speichern eines OCR-Datensatzes inkludierend die Kennzeichen-Bildaufnahme, die Kennzeichen-Zeichenkette und zumindest ein Konfidenzmaß des OCR-Lesevorgangs in einer Datenbank; Bildaufnehmen eines Fahrzeug-Kennzeichens an einem zweiten Ort im Straßennetz, OCR-Lesen einer Kennzeichen-Zeichenkette in der Bildaufnahme und Erzeugen eines aktuellen OCR-Datensatzes inkludierend die Kennzeichen-Bildaufnahme, die Kennzeichen-Zeichenkette und zumindest ein Konfidenzmaß des OCR-Lesevorgangs; und, wenn zumindest ein Konfidenzmaß des aktuellen OCR-Datensatzes einen ersten Mindestkonfidenzwert unterschreitet, Auswählen zumindest eines gespeicherten OCR-Datensatzes aus der Datenbank, dessen Kennzeichen-Bildaufnahme eine einen Mindestähnlichkeitswert überschreitende Ähnlichkeit und/oder die jeweils größte Ähnlichkeit mit der Kennzeichen-Bildaufnahme des aktuellen OCR-Datensatzes hat, und Verwenden des zumindest einen ausgewählten OCR-Datensatzes zur Verbesserung der Kennzeichen-Zeichenkette des aktuellen OCR-Datensatzes. Es werden ein oder mehrere frühere OCR-Leseergebnisse eines Fahrzeug-Kennzeichens zur Unterstützung bzw. Verbesserung eines aktuellen OCR-Leseergebnisses herangezogen, um die Fehlerrate des OCR-Lesevorgangs zu reduzieren.

Das Dokument EP 2 887 333 A1 offenbart ein Verfahren zum Bereitstellen von datenschutzkonformen Beweismitteln bei Auswertung eines Kfz-Kennzeichens mittels OCR. An einem ersten Ort wird zu einer ersten Zeit mit einer Kamera ein erstes Bild eines Fahrzeugs aufgenommen. In dem ersten Bild wird das Kennzeichen des Fahrzeugs hervorgehoben und eine Texterkennung des Kennzeichens durchgeführt. An einem zweiten Ort wird zu einer zweiten Zeit mit einer anderen Kamera ein zweites Bild des Fahrzeugs aufgenommen. In dem zweiten Bild wird ebenfalls eine Texterkennung für das Kennzeichen des Fahrzeugs durchgeführt. Anhand der ersten und zweiten Zeit wird eine Durchschnittsgeschwindigkeit des Fahrzeugs für die Strecke zwischen dem ersten und zweiten Ort bestimmt und mit einer vorgegebenen Höchstgeschwindigkeit verglichen. Wenn die vorgegebene Höchstgeschwindigkeit überschritten wurde, werden Beweismittel gesichert. Hierfür wird ein Hashwert aus dem Kennzeichen und der ersten Zeit gebildet. Bei der OCR Erkennung des Kennzeichens kann es zu bekannten Fehlern kommen. Mögliche Fehler sollen mit einer vorgegebenen Anzahl von Permutationen der Zeichen des erfassten Kennzeichens korrigiert werden.

Das Dokument EP 2 469 497 A1 beschreibt Verfahren zur Bildaufnahme von Fahrzeugen, die eine Strecke zwischen einer Einfahrt und einer Ausfahrt mit zu hoher Geschwindigkeit durchfahren. Das Verfahren umfasst: Erzeugen einer zufälligen Zugriffskennung für ein Fahrzeug; Aufnehmen eines Bildes des Fahrzeugs an der Einfahrt und Speichern des Einfahrtsbildes und der Zugriffskennung in einem ersten Speicher; Erfassen der Einfahrtszeit und zumindest einer Kennung des Fahrzeugs an der Einfahrt; Bilden eines verschlüsselten oder gehashten Werts dieser Einfahrtskennung und Speichern der Einfahrtszeit, des Werts und der Zugriffskennung als Datensatz in einem zweiten Speicher; Erfassen der Ausfahrtszeit und zumindest einer Kennung eines Fahrzeugs an der Ausfahrt; Bilden eines verschlüsselten oder gehashten Werts dieser Ausfahrtskennung und Ermitteln des Datensatzes mit demselben Wert aus dem zweiten Speicher und, wenn die Ausfahrtszeit innerhalb einer vorgegebenen Zeitspanne von der Einfahrtszeit dieses Datensatzes liegt, Verwenden der Zugriffskennung aus diesem Datensatz zum Zugriff auf den ersten Speicher, um das dazu gespeicherte Einfahrtsbild abzurufen.

Weitere Anwendungen von OCR-Erkennung von Kennzeichen sind in den Dokumenten EP 2 320 384 A1, EP 2 360 647 A1 und EP 2 863 338 A2 beschrieben.

Texterkennung und Fehlerkorrektur von elektronischen Texten werden selbstverständlich auch außerhalb des Verkehrswesen benutzt. Das Dokument Furrer, L; Volk, M. "Reducing OCR errors in Gothicscript documents", in: 8th International Conference on Recent Advances in Natural Language Processing (RANLP 2011), Seiten 97 - 103 beschreibt ein Verfahren zur Korrektur von Fehlern in Dokumenten in gotischer Schrift. Das Dokument M. Reynaert "Text Induced Spelling Correction" (XP058392742) beschreibt eine Möglichkeit zur Korrektur von Texten mit Hilfe von Hashwerten. Hierbei werden Kollisionen von Hashwerten verwendet, um gleiche oder zumindest ähnliche Wörter in einem Text zu finden. Auch das Dokument Mor, M.; Fraenkel, A. S. "A hash code method for detecting and correcting spelling errors", Communications of the ACM, 1982, 25. Jg., Nr. 12, S. 935-938 beschreibt ein Verfahren zur Korrektur von Schreibfehlern in Texten mit Hilfe von Hashwerten. Die drei vorgenannten Dokumente betreffen jeweils bestehende (umfangreiche) Texte. Eine wesentliche Annahme hierbei ist, dass in den Texten in der Regel zu einem falsch geschriebenen Wort mehrere richtig geschriebene Exemplare des Worts existieren. Es wird daher nach Übereinstimmungen oder Ähnlichkeiten zwischen dem zu prüfenden Wort und anderen Wörtern in dem Text gesucht, um über die Richtigkeit oder ggf. eine Korrektur zu entscheiden. Ein Kennzeichen eines Kraftfahrzeugs soll jedoch ein jeweils zugeordnetes Kraftfahrzeug eindeutig identifizieren. Eine Dopplung von Kennzeichen darf es nicht geben. Die in den drei vorgenannten Dokumenten beschriebenen Verfahren sind daher für die Korrektur eines Kennzeichens nicht anwendbar.

### Zusammenfassung

Aufgabe ist, verbesserte Technologien für die Texterkennung eines Kennzeichens eines Kraftfahrzeugs zur Verfügung zu stellen. Insbesondere soll eine automatische Korrektur einer fehlerhaften Texterkennung ermöglicht werden.

Es sind ein Verfahren nach Anspruch 1 und ein System nach Anspruch 5 offenbart. Weitere Ausführungsformen sind Gegenstand von abhängigen Ansprüchen.

Einer oder mehrere (z. B. alle) Schritte des Verfahrens können mit einem oder mehreren Prozessoren einer Datenverarbeitungseinrichtung ausgeführt werden.

Das Kennzeichen kann durch ein oder mehrere Zeichen eines Zeichensatzes dargestellt werden, beispielsweise durch eine beliebige Kombination von Buchstaben, Ziffern, Leerzeichen und/oder Sonderzeichen.

Das Kennzeichen kann optisch erfasst werden, beispielsweise mittels einer Bildaufnahmeeinrichtung, z. B. einer Digitalkamera. Beispielsweise kann ein Foto von der Frontseite eines Kraftfahrzeugs und/oder von der Rückseite eines Kraftfahrzeugs erstellt werden, auf welchem das Kennzeichen des Kraftfahrzeugs abgebildet ist.

Das Kennzeichen kann in Form einer Bilddatei vorliegen, beispielsweise als Rastergrafik. Die Texterkennung wandelt das zuvor (z. B. optisch) erfasste Kennzeichen in ein textcodiertes Format um. Die Zeichen des Kennzeichens werden identifiziert und jedem Zeichen wird ein Zahlenwert zugeordnet, der dem Zeichen in einer üblichen Textcodierung entspricht. Beispiele für gebräuchliche Textcodierungen sind ASCII (ASCII - American Standard Code for Information Interchange) und Unicode. Andere Textcodierungen können ebenfalls verwendet werden. Das Ergebnis der Texterkennung ist das OCR-Kennzeichen. Das OCR- Kennzeichen kann ebenfalls ein oder mehrere Zeichen umfassen, beispielsweise einen Satz von N Zeichen (N ist eine natürliche Zahl). Das OCR- Kennzeichen umfasst an jeder Stelle jeweils das Zeichen, das als wahrscheinlichstes Zeichen bei der Texterkennung an dem Kennzeichen ermittelt wurden. Automatisierte Texterkennung innerhalb von Dokumenten ist bekannt. Auf die Einzelheiten der Texterkennung wird an dieser Stelle daher nicht weiter eingegangen.

Bei der Texterkennung kann es zu Fehlern kommen. Einige Fehler können auch systematisch auftreten. Wenn ein (systematischer) Fehler entdeckt wird, besteht grundsätzlich die Möglichkeit, den Fehler zu korrigieren und das falsch erkannte Kennzeichen zusammen mit der notwendigen Korrektur (bzw. den Korrekturen) in einer Korrekturdatenbank zu hinterlegen. So kann bei einem späteren Auftreten desselben Kennzeichens und dessen wiederum fehlerhafter Texterkennung auf die Korrekturdatenbank zugegriffen werden, um das Kennzeichen zu korrigieren. Insbesondere bei personengebundenen Daten können jedoch datenschutzrechtliche Bestimmungen vorsehen, dass das Datum (im vorliegenden Fall das Kennzeichen) oder ein fehlerhaft erkanntes OCR-Datum (hier: OCR-Kennzeichen) nicht gespeichert werden dürfen (auch nicht zu Korrekturzwecken).

Erfindungsgemäß ist daher vorgesehen, ausgehend von dem OCR-Kennzeichen einen Hashwert zu bestimmen, beispielsweise mittels Berechnung durch eine Hashfunktion. Eine Hashfunktion (auch Streuwertfunktion oder Einweg-Hashfunktion genannt) ist eine Einwegfunktion, die eine Eingabemenge beliebiger Größe (z. B. beliebig lange Klartexte, hier das OCR-Kennzeichen) auf einen Wert fester Länge abbildet. Eine Einwegfunktion ist eine Funktion, die sich leicht (mit relativ geringem Rechenaufwand) berechnen lässt, deren Umkehrung jedoch nicht oder nur sehr schwer (mit sehr hohem Rechenaufwand) zu berechnen ist. Der Hashwert lässt keine Rückschlüsse auf das Kennzeichen selbst zu. Die Anwendung der Hashfunktion auf zwei identische (OCR-)Kennzeichen führt jedoch zu identischen Hashwerten. In der Korrekturdatenbank sind die Kennzeichen nicht im Klartext gespeichert, sondern lediglich deren Hashwerte. Mit dem Hashwert des OCR-Kennzeichens kann in der Korrekturdatenbank gesucht werden, ob ein übereinstimmender Hashwert vorliegt.

In der Korrekturdatenbank ist zu jedem gespeicherten Hashwert wenigstens eine Korrekturanweisung hinterlegt. Die wenigstens eine Korrekturanweisung gibt an, wie das fehlerhafte OCR-Kennzeichen zu verändern ist, damit es dem tatsächlichen Kennzeichen entspricht. Wenn der Abgleich des aus dem OCR-Kennzeichen gebildeten Hashwerts mit der Korrekturdatenbank positiv ist, kann die dem gespeicherten Hashwert zugeordnete Korrekturanweisung (oder die Korrekturanweisungen) auf das OCR-Kennzeichen angewendet werden, um ein korrigiertes OCR-Kennzeichen zu erzeugen, das mit dem tatsächlichen Kennzeichen übereinstimmt.

Es kann vorgesehen sein, dass die Korrekturanweisung nur einen bestimmten Teil des OCR-Kennzeichen umfasst. Beispielsweise kann die Korrekturanweisung nicht mehr als M von N der Zeichen mit M < N umfassen (M ist eine natürliche Zahl).

Die wenigstens eine Korrekturanweisung kann eine der folgenden Formen haben:
- ersetze das Zeichen "X" durch das Zeichen "Y",
- ersetze das Zeichen an der Position n durch das Zeichen "Y" oder
- ersetze das Zeichen "X" an der Position n durch das Zeichen "Y".

Hierbei sind "X" und "Y" einzelne Zeichen eines Zeichensatzes, also beispielsweise ein Buchstabe, eine Ziffer, ein Leerzeichen und/oder ein Sonderzeichen; n ist eine natürliche Zahl (1, 2, 3, ...) und gibt die Position des Zeichens in dem OCR-Kennzeichen an. Wenn mehrere Korrekturanweisungen zu einem gespeicherten Hashwert hinterlegt sind, können die mehreren Korrekturanweisungen eine beliebige Kombination der oben angeführten Formen sein.

Die wenigstens eine Korrekturanweisung wird vorzugsweise in maschinenausführbarer Form bereitgestellt, so dass die Korrektur des OCR-Kennzeichen automatisch (z. B. mittels eines Prozessors) und ohne den Eingriff eines Benutzers ausgeführt werden kann.

Es kann vorgesehen sein, dass der Hashwert mittels einer kryptografischen Hashfunktion gebildet wird. Die Hashwerte der Kennzeichen in der Korrekturdatenbank können jeweils mit der kryptografischen Hashfunktion gebildet worden sein. Eine kryptografische Hashfunktion (oder kryptologische Hashfunktion) ist eine spezielle Form einer Hashfunktion, welche kollisionsresistent ist. Es ist praktisch nicht möglich, zwei unterschiedliche Eingabewerte zu finden, die einen identischen Hashwert ergeben. Geeignete Hashfunktionen sind SHA-1 (SHA - secure hash algorithm, SHA-2, SHA-3, MD4 (MD - message digest) und MD5. Andere Hashfunktionen können ebenfalls verwendet werden.

Der Abgleich des gebildeten Hashwerts mit der Korrekturdatenbank kann grundsätzlich für jedes aus einem Kennzeichen erzeugte OCR-Kennzeichen durchgeführt werden. Dies birgt jedoch das Risiko, ein korrektes OCR-Kennzeichen aufgrund der Korrekturdatenbank zu verändern. Dies wird anhand eines Beispiels erläutert. Gemäß dem Beispiel lautet ein erstes Kennzeichen "B TC 123". Das erste Kennzeichen wird von der Texterkennung fälschlicherweise als "B TO 123" erkannt. Es wird angenommen, dass zu dem ersten Kennzeichen ein Eintrag in der Korrekturdatenbank existiert. Der Eintrag umfasst den Hashwert des falschen OCR-Kennzeichens (also den Hashwert zu "B TO 123") und eine Korrekturanweisung (z. B. ersetze "O" durch "C" oder ersetze das vierte Zeichen durch "C" (Leerzeichen werden mitgezählt)). Wenn nun ein zweites Kennzeichen eines anderen Fahrzeugs tatsächlich "B TO 123" ist, und nach der Erfassung von der Texterkennung korrekterweise als "B TO 123" erkannt wird, würde das OCR-Kennzeichen zu dem gleichen Hashwert führen wie beim ersten Kennzeichen. Es besteht also die Möglichkeit, dass das aus dem zweiten Kennzeichen abgeleitete (korrekte) OCR-Kennzeichen nach dem Abgleich mit der Korrekturdatenbank fälschlicherweise zu "B TC 123" geändert wird. Um dies zu vermeiden ist vorgesehen, dass vor dem Bilden des Hashwerts ein Referenztest für das OCR-Kennzeichen ausgeführt wird und die weiteren Schritte (Bilden des Hashwerts, Abgleich des Hashwerts mit der Korrekturdatenbank und ggf. Korrektur des OCR-Kennzeichens) nur ausgeführt werden, wenn der Referenztest negativ ausfällt. Falls der Referenztest positiv ausfällt, wird davon ausgegangen, dass das OCR-Kennzeichen korrekt ermittelt wurde und eine Korrektur nicht erforderlich ist.

Es ist vorgesehen, dass das OCR-Kennzeichen als Referenztest mit einer Buchungsdatenbank abgeglichen wird, wobei die Buchungsdatenbank gespeicherte Kennzeichen (im Klartext) enthält. Die weiteren Schritte (Bilden des Hashwerts, Abgleich des Hashwerts mit der Korrekturdatenbank und ggf. Korrektur des OCR-Kennzeichens) werden nur ausgeführt, wenn der Abgleich negativ ist, also kein mit dem OCR-Kennzeichen übereinstimmendes gespeichertes Kennzeichen in der Buchungsdatenbank gefunden wird. Hierbei ist vorgesehen, dass die in der Buchungsdatenbank gespeicherten Kennzeichen jeweils Fahrzeugen zugeordnet sind, welche eine Mautgebühr für eine mautpflichtige Strecke bereits gezahlt oder eine mautpflichtige Strecke gebucht haben. Die Buchungsdatenbank enthält also eine Liste von Kennzeichen von Kraftfahrzeugen, welche eine Berechtigung für die Nutzung einer Straße haben.

Das Verfahren kann weiterhin ein Erfassen wenigstens eines Fahrzeugmerkmals umfassen. In der Korrekturdatenbank ist jedem gespeicherten Hashwert eine Information zu wenigstens einem Fahrzeugmerkmal zugeordnet. Der Abgleich mit der Korrekturdatenbank erfolgt dann unter Berücksichtigung des wenigstens einen Fahrzeugmerkmals, das heißt, für den Abgleich mit der Korrekturdatenbank werden der erzeugte Hashwert und das wenigstens eine erfasste Fahrzeugmerkmal mit den in der Korrekturdatenbank gespeicherten Hashwerten und der jeweils zugeordneten Information zu dem wenigstens einen Fahrzeugmerkmal verglichen.

Das wenigstens eine Fahrzeugmerkmal kann aus der folgenden Gruppe ausgewählt sein: Fahrzeugtyp, Anzahl der Achsen einer Zugmaschine, Fahrzeughöhe, Fahrzeugbreite und Fahrzeuglänge. Des Weiteren kann als Fahrzeugmerkmal die Farbe des Fahrzeugs, eine Geometrie (z. B. Frontansicht eines Lkw ist im Wesentlichen rechteckig, Frontansicht eines Pkw ist im Wesentlichen trapezförmig), ein Profil (Seitenansicht des Fahrzeugs), eine Position des Kennzeichens am Fahrzeug oder besondere Merkmale wie herausstehende Spiegel oder Aufbauten (z. B. Kran oder Autotransporter) verwendet werden.

Bei der Berücksichtigung wenigstens eines Fahrzeugmerkmals gibt es für das Bilden des Hashwerts und den Abgleich mit der Korrekturdatenbank verschiedene Ausführungsformen, die im Folgenden erläutert werden.

Für die Hashwertberechnung kann ausgehend von dem OCR-Kennzeichen ein Hashwert berechnet werden. Ergänzend kann vorgesehen sein, dass ausgehend von dem Fahrzeugmerkmal (bzw. den Fahrzeugmerkmalen) ein weiterer Hashwert berechnet wird. Alternativ kann auch vorgesehen sein, dass ein Tupel gebildet wird, welches das OCR-Kennzeichen und das Fahrzeugmerkmal (bzw. die Fahrzeugmerkmale) umfasst. In diesem Fall wird der Hashwert ausgehend von dem Tupel gebildet. Als Ergebnis der Hashwertberechnung können also vorliegen: A) der Hashwert zu dem OCR-Kennzeichen und das Fahrzeugmerkmal (bzw. die Fahrzeugmerkmale) im Klartext, B) der Hashwert zu dem OCR-Kennzeichen und der weitere Hashwert zu dem Fahrzeugmerkmal (bzw. den Fahrzeugmerkmalen) oder C) der Hashwert zu dem Tupel umfassend das OCR-Kennzeichen und das Fahrzeugmerkmal (bzw. die Fahrzeugmerkmale).

Die Korrekturdatenbank ist in Anlehnung an die Hashwertberechnung aufgebaut. In einer ersten Ausführungsform enthält die Korrekturdatenbank mehrere gespeicherte Hashwerte von Kennzeichen jeweils zusammen mit einem Fahrzeugmerkmal (oder ggf. mehreren Fahrzeugmerkmalen) im Klartext (entspricht dem Ergebnis A der Hashwertberechnung). In einer zweiten Ausführungsform enthält die Korrekturdatenbank mehrere gespeicherte Hashwerte von Kennzeichen jeweils zusammen mit den weiteren Hashwerten zu dem Fahrzeugmerkmal (bzw. den Fahrzeugmerkmalen) (entspricht dem Ergebnis B der Hashwertberechnung). In einer dritten Ausführungsform enthält die Korrekturdatenbank mehrere gespeicherte Hashwerte, die von Tupeln umfassend das OCR-Kennzeichen und das Fahrzeugmerkmal (bzw. die Fahrzeugmerkmale) abgeleitet sind (entspricht dem Ergebnis C der Hashwertberechnung).

Bei Berücksichtigung des wenigstens einen Fahrzeugmerkmals kann die Korrekturdatenbank zu jedem gespeicherten Hashwert (z. B. nach einer der Hashwertberechnungen A, B oder C) eine Kennzeicheninformation enthalten. Die Kennzeicheninformation umfasst entweder mindestens eine Korrekturanweisung (wie bereits beschrieben) oder eine Korrektheitsbestätigung. Die Korrektheitsbestätigung gibt an, dass das zu dem Hashwert und dem Fahrzeugmerkmal (bzw. den Fahrzeugmerkmalen) gehörende OCR-Kennzeichen korrekt von der Texterkennung erkannt wurde.

Das System kann zwei räumlich voneinander getrennte Komponenten aufweisen, beispielsweise eine Erfassungseinrichtung und eine Auswerteeinrichtung. Die Erfassungseinrichtung kann eine Bildaufnahmeeinheit (z. B. eine Digitalkamera) zum Erfassen des Kennzeichens aufweisen. Des Weiteren kann die Erfassungseinrichtung einen Prozessor und eine Kommunikationseinheit aufweisen. Der Prozessor der Erfassungseinrichtung kann konfiguriert sein, einen oder mehrere der in der vorliegenden Offenbarung beschriebenen Verfahrensschritte auszuführen. Die Kommunikationseinheit kann konfiguriert sein, Erfassungsdaten an die Auswerteeinrichtung zu übertragen und/oder von der Auswerteeinrichtung zu empfangen. Die Erfassungsdaten können beispielsweise eine Bildaufnahme mit dem Kennzeichen und/oder das OCR-Kennzeichen umfassen. Die Übertragung kann drahtlos erfolgen, beispielsweise über ein Mobilfunknetz.

Die Auswerteeinrichtung kann eine Kommunikationseinheit aufweisen, welche konfiguriert ist, Erfassungsdaten von der Erfassungseinrichtung zu empfangen und/oder an die Erfassungseinrichtung zu senden. Die Auswerteeinrichtung kann des Weiteren einen Prozessor und einen Speicher aufweisen. Der Speicher kann die Korrekturdatenbank und/oder die Buchungsdatenbank enthalten. Der Prozessor der Auswerteeinrichtung kann konfiguriert sein, einen oder mehrere der in der vorliegenden Offenbarung beschriebenen Verfahrensschritte auszuführen, beispielsweise:
- Berechnen eines Hashwerts zu einem OCR-Kennzeichen,
- Abgleichen des OCR-Kennzeichens mit der Buchungsdatenbank,
- Abgleichen des Hashwerts des OCR-Kennzeichens mit der Korrekturdatenbank und
- Ausführen einer oder mehrerer Korrekturanweisungen, um das OCR-Kennzeichen zu korrigieren.

Die Korrekturdatenbank kann beispielsweise folgendermaßen aufgebaut werden. Wenn der Abgleich des aus dem OCR-Kennzeichen gebildeten Hashwerts mit der Korrekturdatenbank negativ ist, also kein dem Hashwert entsprechender gespeicherter Hashwert in der Korrekturdatenbank vorhanden ist, können das Kennzeichen und das OCR-Kennzeichen an eine benutzergeführte Weiterbearbeitung weitergeleitet werden. Der Benutzer vergleicht das Kennzeichen und das OCR-Kennzeichen. Falls das Kennzeichen und das OCR-Kennzeichen übereinstimmen, ist nichts weiter zu veranlassen; eine Korrektur ist nicht erforderlich. Wenn das Kennzeichen und das OCR-Kennzeichen nicht übereinstimmen, erstellt der Benutzer eine Korrekturanweisung (oder ggf. mehrere Korrekturanweisungen). Mit der Anwendung der Korrekturanweisung (bzw. der Korrekturanweisungen) wird ein korrigiertes OCR-Kennzeichen erzeugt, sodass das korrigierte OCR-Kennzeichen dem tatsächlichen Kennzeichen entspricht. Der Hashwert des falschen OCR-Kennzeichens wird zusammen mit der Korrekturanweisung (bzw. den Korrekturanweisungen) in der Korrekturdatenbank gespeichert. Bei einem späteren Auftreten des OCR-Kennzeichens kann dann eine automatische Korrektur (ohne Mitwirkung des Benutzers) erfolgen.

Wenn zusätzlich zum Kennzeichen wenigstens ein Fahrzeugmerkmal erfasst wird, kann bei einer Übereinstimmung des OCR-Kennzeichens mit dem Kennzeichen auch eine Korrektheitsbestätigung zusammen mit dem Hashwert des OCR-Kennzeichens in der Korrekturdatenbank hinterlegt werden. Anhand des bereits beschriebenen Beispiels kann dies folgendermaßen aussehen: Ein erstes Fahrzeug hat das Kennzeichen "B TC 123". Als Fahrzeugparameter wird die Farbe erfasst, beispielsweise blau. Das Kennzeichen wird bei der Texterkennung fälschlicherweise als "B TO 123" erkannt. Ein zweites Fahrzeug ist gelb und hat das Kennzeichen "B TO 123". Das Kennzeichen des zweiten Fahrzeugs wird bei der Texterkennung korrekt als "B TO 123" erkannt. In der Korrekturdatenbank kann nun hinterlegt sein, dass zur Kombination des Hashwerts von "B TO 123" mit der Farbe Blau eine Korrekturanweisung gehört und das zur Kombination des Hashwerts von "B TO 123" mit der Farbe Gelb eine Korrektheitsbestätigung gehört, also eine Information, dass das OCR-Kennzeichen des zweiten (gelben) Fahrzeugs korrekt ist (und nicht korrigiert werden soll).

Merkmale, die im Zusammenhang mit einem Verfahren offenbart sind, können in analoger Weise auf ein entsprechendes System angewendet werden und anders herum.

Die Begriffe "Kraftfahrzeug" und "Fahrzeug" werden synonym verwendet, soweit sich aus der konkreten Beschreibung nichts Anderes ergibt.

### Beschreibung von Ausführungsbeispielen

Im Folgenden werden beispielhafte Ausführungsformen unter Bezugnahme auf Figuren näher erläutert. Es zeigen:
- Fig. 1: eine schematische Darstellung einer Datenverarbeitungseinrichtung, die geeignet ist, einige der hier offenbarten Verfahren auszuführen, insbesondere die in den Fig. 2 und Fig. 3 gezeigten Verfahren,
- Fig. 2: eine erste Ausführungsform eines Verfahrens,
- Fig. 3: eine zweite Ausführungsform des Verfahrens,
- Fig. 4: eine schematische Darstellung eines Systems, das geeignet ist, einige der hier offenbarten Verfahren auszuführen, insbesondere die in den Fig. 5 - 10 gezeigten Verfahren,
- Fig. 5 - 10: weitere Ausführungsformen des Verfahrens,
- Fig. 11: eine schematische Darstellung eines weiteren Systems, das geeignet ist, einige der hier offenbarten Verfahren auszuführen, insbesondere die in den Fig. 12 und Fig. 13 gezeigten Verfahren,
- Fig. 12: eine weitere Ausführungsform des Verfahrens und
- Fig. 13: noch eine weitere Ausführungsform des Verfahrens.

Im Folgenden werden für gleiche Komponenten/Verfahrensschritte gleiche Bezugszeichen verwendet.

In einigen Ausführungsformen werden Ausführungsbeispiele für ein allgemeines Datum beschrieben. Hierbei kann der Begriff "Datum" eine Angabe oder eine Information zu einer Person oder einer Sache betreffen. Das Datum kann ein personengebundenes Datum und/oder ein objektgebundenes Datum sein. Das Datum kann durch ein oder mehrere Zeichen eines Zeichensatzes dargestellt werden, beispielsweise durch eine beliebige Kombination von Buchstaben, Ziffern, Leerzeichen und/oder Sonderzeichen. Das Datum kann ein Kennzeichen eines Kraftfahrzeugs sein (mit dem Kennzeichen kann der Halter des Fahrzeugs ermittelt werden, daher ist es ein personengebundenes Datum). Das Datum kann auch andere Angaben zu einer Person umfassen, wie beispielsweise Name, Adresse, Telefonnummer oder Geburtstag. Das Datum kann auch eine Seriennummer eines Produkts sein. Andere Ausführungsformen beziehen sich direkt auf ein Kennzeichen eines Kraftfahrzeugs.

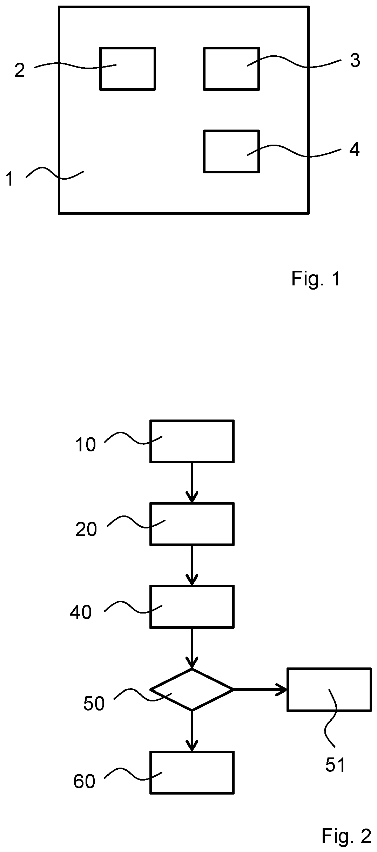

Eine schematische Darstellung einer Datenverarbeitungseinrichtung 1 ist in Fig. 1 gezeigt.

Die Datenverarbeitungseinrichtung 1 weist eine Bildaufnahmeeinrichtung 2, einen Prozessor 3 und einen Speicher 4 auf. Die Datenverarbeitungseinrichtung 1 kann beispielsweise als Smartphone oder als Tablet ausgeführt sein.

Die Bildaufnahmeeinrichtung 2 ist eingerichtet, eine Abbildung eines Datums zu erfassen. Die Bildaufnahmeeinrichtung 2 kann beispielsweise als Digitalkamera ausgeführt sein. Ein Foto des Datums liegt dann als Bilddatei vor, üblicherweise als Rastergrafik.

Der Prozessor 3 ist eingerichtet, eine automatische Texterkennung (OCR-Erkennung) ausgehend von der Abbildung des Datums auszuführen und ein OCR-Datum zu erzeugen. In dem OCR-Datum sind die einzelnen Zeichen des Datums (z. B. Buchstaben, Zahlen, Sonderzeichen und/oder Leerzeichen) textcodiert. Der Prozessor kann beispielsweise als CPU (CPU - central processing unit) oder als Mikrocontroller ausgeführt sein.

Der Speicher 4 umfasst eine Korrekturdatenbank. In der Korrekturdatenbank sind Hashwerte von Daten und Korrekturanweisungen gespeichert. Jedem gespeicherten Hashwert ist wenigstens eine Korrekturanweisung zugeordnet. Die wenigstens eine Korrekturanweisung gibt an, wie ein fehlerhaftes OCR-Datum zu verändern ist, damit es dem tatsächlichen Datum entspricht. Der Speicher 4 kann beispielsweise als Festplatte oder als Flashspeicher ausgeführt sein.

Der Prozessor 3 ist weiterhin eingerichtet, aus dem OCR-Datum mittels einer Hashfunktion einen Hashwert zu berechnen. Für die Berechnung des Hashwerts kann jede bekannte Hashfunktion verwendet werden, beispielsweise SHA-1, SHA-2, SHA-3, MD4 oder MD5.

Der Prozessor 3 ist des Weiteren eingerichtet, den berechneten Hashwert mit den in der Korrekturdatenbank gespeicherten Hashwerten abzugleichen und, falls der Abgleich positiv ist, die dem gespeicherten Hashwert zugeordnete wenigstens eine Korrekturanweisung auf das OCR-Datum anzuwenden, um ein korrigiertes OCR-Datum zu erzeugen.

Die Datenverarbeitungseinrichtung 1 kann optional eine Anzeigeeinrichtung aufweisen oder mit einer Anzeigeeinrichtung gekoppelt sein (nicht dargestellt). Die Anzeigeeinrichtung kann eingerichtet sein, die folgenden Elemente einzeln oder in beliebiger Kombination anzuzeigen: die Abbildung des Datums, das aus dem Datum erzeugte OCR-Datum, die wenigstens eine Korrekturanweisung und/oder das korrigierte OCR-Datum.

In Fig. 2 ist eine Ausführungsform eines Verfahrens zur Korrektur eines Datums dargestellt, welche nicht in den Schutzbereich der Ansprüche fällt.

Zunächst wird mittels der Bildaufnahmeeinrichtung 2 ein Datum optisch erfasst und eine Abbildung des Datums erstellt (Schritt 10), beispielsweise in Form einer Rastergrafik. Der Prozessor 3 führt ein Texterkennungsprogramm aus, um aus der Abbildung des Datums ein OCR-Datum zu erzeugen (Schritt 20). Aus dem OCR-Datum wird mittels des Prozessors 3 ein Hashwert berechnet (Schritt 40). Der berechnete Hashwert wird mittels des Prozessors 3 mit einer Korrekturdatenbank abgeglichen (Schritt 50). Wenn ein dem berechneten Hashwert entsprechender gespeicherter Hashwert in der Korrekturdatenbank gefunden wird, wird die zugehörige Korrekturanweisung (bzw. die zugehörigen Korrekturanweisungen) mittels des Prozessors 3 auf das OCR-Datum angewendet und ein korrigiertes OCR-Datum erzeugt (Schritt 60). Das korrigierte OCR-Datum entspricht dann dem tatsächlichen Datum, das auf der Abbildung dargestellt ist. Falls der Abgleich des berechneten Hashwerts mit der Korrekturdatenbank negativ ist, wird das unveränderte OCR-Datum zu einer benutzergestützten Weiterbearbeitung weitergeleitet (Schritt 51). Die benutzergestützte Weiterbearbeitung kann einen benutzergestützten Vergleich des Datums mit dem OCR-Datum und ggf. eine benutzergestützte Korrektur des OCR-Datums sowie das Anlegen eines neuen Eintrags in der Korrekturdatenbank für das OCR-Datum mit wenigstens einer Korrekturanweisung umfassen.

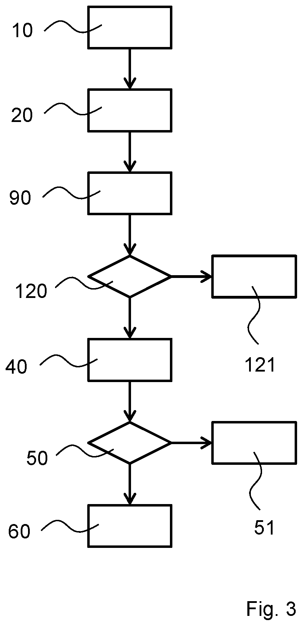

In Fig. 3 ist eine weitere Ausführungsform des Verfahrens gezeigt, welche nicht in den Schutzbereich der Ansprüche fällt.

Gemäß dieser Ausführungsform ist vorgesehen, dass nach dem Erfassen des Datums und dem Erstellen der Abbildung des Datums (Schritt 10) bei der OCR-Erkennung des Datums (Schritt 20) ein Konfidenzwert mithilfe des Prozessors 3 bestimmt wird (Schritt 90). Der Konfidenzwert wird mittels des Prozessors 3 mit einem vorbestimmten Schwellenwert verglichen (Schritt 120).

Wenn der Konfidenzwert kleiner ist als der Schwellenwert, ist dies ein Zeichen, dass die OCR-Erkennung nicht zuverlässig war. In diesem Fall wird - analog zum Vorgehen der in Fig. 1 dargestellten Ausführungsform - ein Hashwert ausgehend von dem OCR-Datum berechnet (Schritt 40), der berechnete Hashwert mit der Korrekturdatenbank abgeglichen (Schritt 50) und eine Korrektur des OCR-Datums durchgeführt (Schritt 60) oder eine weitere Auswertung veranlasst (Schritt 51).

Wenn der Konfidenzwert größer oder gleich dem Schwellenwert ist, so ist dies ein Indiz dafür, dass die OCR-Erkennung korrekt ist, und dass das OCR-Datum mit dem in der Abbildung dargestellten Datum übereinstimmt. Das OCR-Datum wird in diesem Fall direkt (also ohne Abgleich mit der Korrekturdatenbank) für eine weitere Bearbeitung verwendet (Schritt 121). Die weitere Bearbeitung kann eine maschinengestützte (automatische) Verarbeitung in einer Datenverarbeitungsanlage umfassen.

Die Auswertung des Konfidenzwerts erfolgt bevorzugt vor der Berechnung des Hashwerts. Hierdurch können Ressourcen gespart werden, wenn anhand des Konfidenzwerts festgestellt wird, dass die OCR-Erkennung wahrscheinlich zuverlässig war, sodass eine Korrektur nicht erforderlich ist und damit auf eine Bildung des Hashwerts verzichtet werden kann.

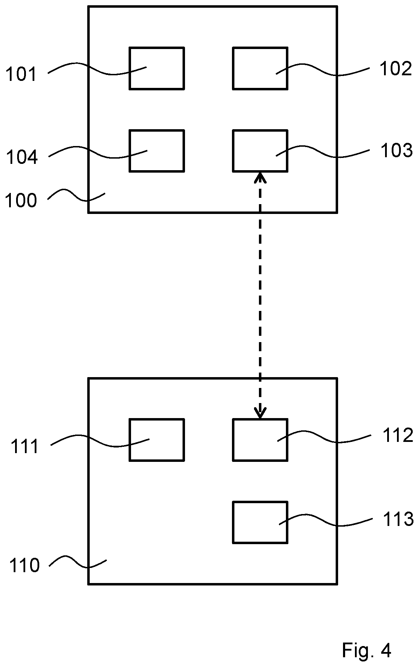

Fig. 4 zeigt eine schematische Darstellung eines Systems, das konfiguriert ist, einige der hier offenbarten Ausführungsformen des Verfahrens auszuführen.

Das System weist eine Erfassungseinrichtung 100 und eine Auswerteeinrichtung 110 auf. Die Auswerteeinrichtung 110 ist räumlich von der Erfassungseinrichtung 100 getrennt.

Die Erfassungseinrichtung 100 weist eine Kamera 101 (z. B. eine Digitalkamera) zum Aufnehmen einer Abbildung eines Kennzeichens auf. Die Abbildung des Kennzeichens kann Teil einer Abbildung eines Kraftfahrzeugs sein, beispielsweise eines Lastkraftwagens. Die Abbildung kann erzeugt werden, indem die Frontseite des Kraftfahrzeugs (an welcher üblicherweise das Kennzeichen angeordnet ist) fotografiert wird.

Des Weiteren weist die Erfassungseinrichtung 100 einen Prozessor 102 (z. B. eine CPU oder einen Mikrocontroller) und eine Kommunikationseinheit 103 auf. Die Erfassungseinrichtung 100 kann optional eine weitere Kommunikationseinheit 104 aufweisen. Die Erfassungseinrichtung 100 kann als eine die Straße überspannende Kontrollbrücke oder als eine am Straßenrand postierte Kontrollsäule ausgeführt sein.

Die Auswerteeinrichtung 110 weist eine Kommunikationseinheit 112, einen Prozessor 111 (z. B. eine CPU oder einen Mikrocontroller) und einen Speicher 113 (z. B. eine Festplatte oder einen Flashspeicher) auf. Die Auswerteeinrichtung 110 kann als Server ausgeführt sein.

Die Kommunikationseinheit 103 der Erfassungseinrichtung 100 und die Kommunikationseinheit 112 der Auswerteeinrichtung 110 sind konfiguriert, Daten und/oder Signale in beide Richtungen drahtlos miteinander auszutauschen, beispielsweise über eine Funkschnittstelle wie Mobilfunk, z. B. GSM, UMTS oder LTE (GSM - Global System for Mobile Communications, UMTS - Universal Mobile Telecommunications System, LTE - Long Term Evolution). Es können Daten und/oder Signale von der Kommunikationseinheit 103 der Erfassungseinrichtung 100 an die Kommunikationseinheit 112 der Auswerteeinrichtung 110 gesendet werden. Es ist auch möglich, dass Daten und/oder Signale von der Kommunikationseinheit 112 der Auswerteeinrichtung 110 an die Kommunikationseinheit 103 der Erfassungseinrichtung 100 gesendet werden.

Die weitere Kommunikationseinheit 104 der Erfassungseinrichtung 100 ist konfiguriert, Daten und/oder Signale über eine Funkschnittstelle mit einem in einem Fahrzeug angeordneten Fahrzeuggerät auszutauschen, also Daten und/oder Signale an das Fahrzeuggerät zu senden und/oder von dem Fahrzeuggerät zu empfangen. Insbesondere kann die weitere Kommunikationseinheit 104 der Erfassungseinrichtung 100 konfiguriert sein, eine Anfrage an das Fahrzeuggerät senden, mit welcher das Fahrzeuggerät aufgefordert wird, Fahrzeugdaten an die weitere Kommunikationseinheit 104 der Erfassungseinrichtung 100 zu übermitteln. Die Fahrzeugdaten können das Kennzeichen des Fahrzeugs umfassen. Die Funkschnittstelle der weiteren Kommunikationseinheit 104 der Erfassungseinrichtung 100 kann als DSRC-Schnittstelle (DSRC - dedicated short range communication) ausgeführt sein. DSRC ermöglicht eine drahtlose Kommunikation in einer sehr kleinen Kommunikationszone (Reichweite typischerweise bis 50 m). DSRC kann als Infrarot-DSRC oder als Mikrowellen-DSRC (µWave-DSRC) bereitgestellt sein. Mikrowellen-DSRC sendet beispielsweise mit einer Frequenz im Bereich von 5,8 - 5,9 GHz mit maximal 2 W Sendeleistung. In Europa wird Mikrowellen-DSRC unter anderem für die elektronische Mauterhebung (Österreich, Polen, Tschechische Republik, Frankreich) und die Kontrolle von GNSS-basierten Mauterhebungsgeräten (Deutschland, Slowakei, Belgien) verwendet.

Der Speicher 113 der Auswerteeinrichtung 110 kann eine Korrekturdatenbank und/oder eine Buchungsdatenbank enthalten. Die Korrekturdatenbank und die Buchungsdatenbank können auch in zwei verschiedenen Speichermedien gespeichert sein. Es kann auch vorgesehen sein, dass die Korrekturdatenbank und die Buchungsdatenbank in verschiedenen Rechnersystemen (mit jeweils eigenen Prozessoren und Speicherelementen) implementiert sind (nicht dargestellt).

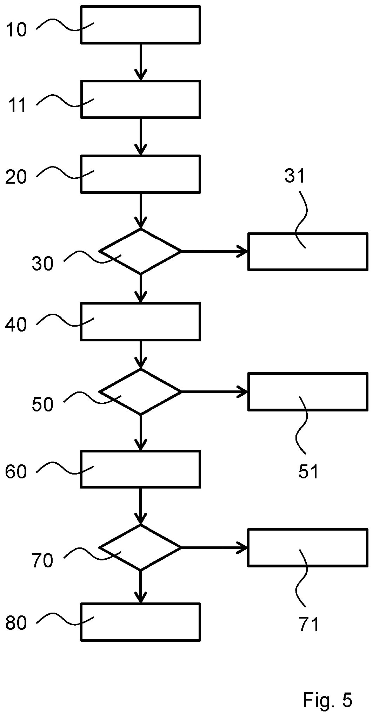

Eine weitere Ausführungsform des Verfahrens ist in Fig. 5 dargestellt.

Mit der Kamera 101 der Erfassungseinrichtung 100 wird ein Foto erstellt, welches ein Kennzeichen eines Kraftfahrzeugs umfasst (Schritt 10).

Das Foto wird mithilfe der Kommunikationseinheit 103 der Erfassungseinrichtung 100 an die Kommunikationseinheit 112 der Auswerteeinrichtung 110 übermittelt (Schritt 11).

Mit dem Prozessor 111 der Auswerteeinrichtung 110 wird ausgehend von dem auf dem Foto abgebildeten Kennzeichen ein OCR-Kennzeichen erstellt (Schritt 20). Das OCR-Kennzeichen liegt dann in textcodierter Form vor und kann von dem Prozessor 111 der Auswerteeinrichtung 110 weiterverarbeitet werden.

Das OCR-Kennzeichen wird mithilfe des Prozessors 111 der Auswerteeinrichtung 110 mit einer Buchungsdatenbank abgeglichen (Schritt 30). Die Buchungsdatenbank enthält gespeicherte Kennzeichen von Fahrzeugen (im Klartext). Die gespeicherten Kennzeichen sind Mautbuchungen oder Mautbefreiungen zugeordnet, repräsentieren also Fahrzeuge, für die entweder eine mautpflichtige Strecke gebucht und bezahlt wurde, oder Fahrzeuge, welche von der Mautpflicht befreit sind.

Wenn zu dem OCR-Kennzeichen ein Eintrag in der Buchungsdatenbank gefunden wird (Schritt 31), gibt es zwei Möglichkeiten: i) das OCR-Kennzeichen wurde korrekt ermittelt, und es liegt eine ordnungsgemäße Buchung oder Mautbefreiung vor oder ii) das OCR-Kennzeichen wurde nicht korrekt ermittelt (z. B. wurde das tatsächliche Kennzeichen "B TC 123" als "B TO 123" erkannt); es gibt jedoch zu dem falsch erkannten OCR-Kennzeichen eine Buchung oder Mautbefreiung eines anderen Fahrzeugs (welches tatsächlich das Kennzeichen "B TO 123" hat) (falsch-positives Ergebnis). Das Verfahren kann optional einen weiteren Schritt umfassen, in welchem eine Information von der Auswerteeinrichtung 110 an die Erfassungseinrichtung 100 gesendet wird, dass zu dem Kennzeichen ein Eintrag in der Buchungsdatenbank gefunden wurde (nicht dargestellt).

Bei einer Anwendung des Verfahrens in einem Mautsystem erfolgt die Kontrolle positionsbezogen. Die Position der Erfassungseinrichtung 100 ist einem Streckenabschnitt zugeordnet. Hinzu kommt die Zeit der Erfassung des Kennzeichens. Damit es zu einem falsch-positiven Ergebnis kommt, müssten also zwei Fahrzeuge (mit den Kennzeichen "B TC 123" und "B TO 123") zu nahezu der gleichen Zeit (im Bereich von einigen Stunden) an nahezu dem gleichen Ort (der Position der Erfassungseinrichtung 100) sein. Dieser Fall wird als sehr unwahrscheinlich angesehen und hier nicht weiterverfolgt.

Falls der Abgleich des OCR-Kennzeichens mit der Buchungsdatenbank kein Ergebnis liefert, besteht die Möglichkeit, dass die OCR-Erkennung des Kennzeichens nicht das korrekte Kennzeichen ergeben hat. Von dem OCR-Kennzeichen wird daraufhin mittels des Prozessors 111 der Auswerteeinrichtung 110 ein Hashwert berechnet (Schritt 40).

Der berechnete Hashwert wird mithilfe des Prozessors 111 der Auswerteeinrichtung 110 mit einer Korrekturdatenbank abgeglichen (Schritt 50). Die Korrekturdatenbank enthält mehrere gespeicherte Hashwerte von Kennzeichen und zu jedem gespeicherten Hashwert mindestens eine Korrekturanweisung. Die Korrekturanweisung gibt an, wie das OCR-Kennzeichen verändert werden muss, damit es dem tatsächlichen Kennzeichen entspricht. In Anlehnung an das obige Beispiel kann die Korrekturanweisung beispielsweise lauten: i) ersetze das Zeichen "O" durch das Zeichen "C" oder ii) ersetze das vierte Zeichen (Position n = 4, Leerzeichen werden mitgezählt) des Kennzeichens durch das Zeichen "C".

Wenn der Abgleich mit der Korrekturdatenbank keine Übereinstimmung ergibt, wird das OCR-Kennzeichen zu einer benutzergestützten Weiterbearbeitung weitergeleitet (Schritt 51).

Falls zu dem Hashwert ein Eintrag in der Korrekturdatenbank gefunden wird, wird die dem gespeicherten Hashwert zugeordnete Korrekturanweisung (bzw. die Korrekturanweisungen) mittels des Prozessors 111 der Auswerteeinrichtung 110 auf das OCR-Kennzeichen angewendet und ein korrigiertes OCR-Kennzeichen erzeugt (Schritt 60).

Das korrigierte OCR-Kennzeichen wird anschließend mittels des Prozessors 111 der Auswerteeinrichtung 110 mit der Buchungsdatenbank abgeglichen (Schritt 70). Falls es keine Übereinstimmung gibt, erfolgt eine benutzergestützte Weiterbearbeitung (Schritt 71). Wenn nun eine Übereinstimmung gefunden wird, wird davon ausgegangen, dass eine korrekte Buchung oder Mautbefreiung vorliegt (Schritt 80). Das Verfahren kann optional einen weiteren Schritt umfassen, in welchem eine Information von der Auswerteeinrichtung 110 an die Erfassungseinrichtung 100 gesendet wird, dass zu dem Kennzeichen ein Eintrag in der Buchungsdatenbank gefunden wurde (nicht dargestellt).

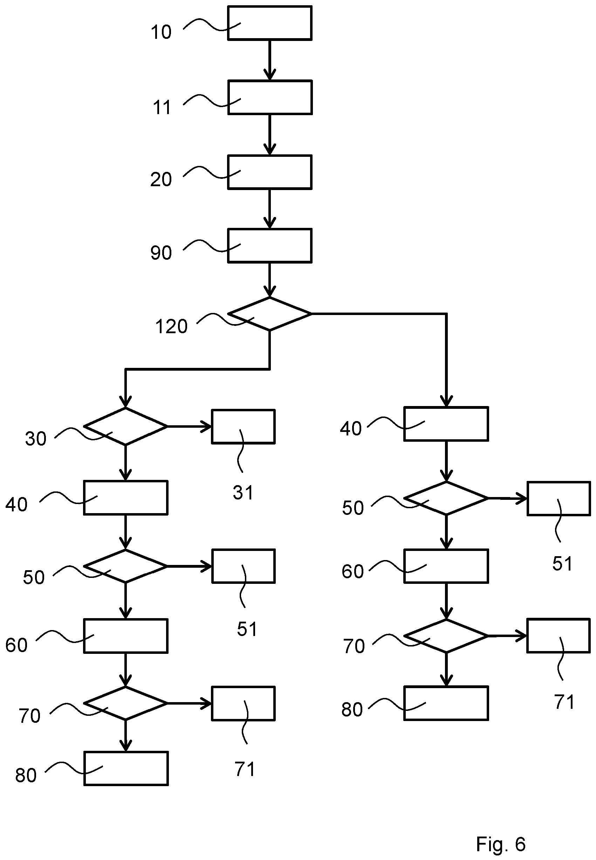

Eine weitere Ausführungsform des Verfahrens ist in Fig. 6 gezeigt, welche nicht in den Schutzbereich der Ansprüche fällt.

Mit der Kamera 101 der Erfassungseinrichtung 100 wird ein Foto erstellt, welches ein Kennzeichen eines Kraftfahrzeugs umfasst (Schritt 10).

Das Foto wird mithilfe der Kommunikationseinheit 103 der Erfassungseinrichtung 100 an die Kommunikationseinheit 112 der Auswerteeinrichtung 110 übermittelt (Schritt 11).

Mit dem Prozessor 111 der Auswerteeinrichtung 110 wird ausgehend von dem auf dem Foto abgebildeten Kennzeichen ein OCR-Kennzeichen erstellt (Schritt 20). Das OCR-Kennzeichen liegt dann in textcodierter Form vor und kann von dem Prozessor 111 der Auswerteeinrichtung 110 weiterverarbeitet werden.

Bei der Texterkennung des Kennzeichens wird mittels des Prozessors 111 der Auswerteeinrichtung 110 ein oder mehrere Konfidenzwerte berechnet (Schritt 90). Ein Konfidenzwert ist ein Maß für die Wahrscheinlichkeit, dass das Ergebnis der Texterkennung dem ursprünglichen Ausgangstext entspricht. Der Konfidenzwert kann für ein Wort (eine komplette Zeichenfolge wie beispielsweise ein vollständiges Kennzeichen) oder für einzelne Zeichen bestimmt werden. Bevorzugt wird bei den hier offenbarten Ausführungsformen jeweils ein Konfidenzwert für jedes einzelne Zeichen (ein Buchstabe, eine Ziffer, ein Leerzeichen und/oder ein Sonderzeichen) des Kennzeichens berechnet. Für das beispielhafte Kennzeichen "B TC 123" werden daher acht Konfidenzwerte (für drei Buchstaben, drei Ziffern und zwei Leerzeichen) bestimmt.

Der Konfidenzwert bzw. die Konfidenzwerte werden mittels des Prozessors 111 der Auswerteeinrichtung 110 mit einem vorbestimmten Schwellenwert verglichen (Schritt 120).

Wenn der Konfidenzwert oder einer der mehreren Konfidenzwerte kleiner ist als der Schwellenwert, ist dies ein Indiz, dass die Texterkennung für zumindest einen Teil des Kennzeichens nicht erfolgreich war und somit das OCR-Kennzeichen nicht dem tatsächlichen Kennzeichen entspricht. In diesem Fall wird von dem OCR-Kennzeichen mittels des Prozessors 111 der Auswerteeinrichtung 110 ein Hashwert berechnet (Schritt 40).

Der berechnete Hashwert wird mithilfe des Prozessors 111 der Auswerteeinrichtung 110 mit einer Korrekturdatenbank abgeglichen (Schritt 50). Wenn der Abgleich mit der Korrekturdatenbank keine Übereinstimmung ergibt, wird das OCR-Kennzeichen zu einer benutzergestützten Weiterbearbeitung weitergeleitet (Schritt 51). Falls zu dem Hashwert ein Eintrag in der Korrekturdatenbank gefunden wird, wird die dem gespeicherten Hashwert zugeordnete Korrekturanweisung (bzw. die Korrekturanweisungen) mittels des Prozessors 111 der Auswerteeinrichtung 110 auf das OCR-Kennzeichen angewendet und ein korrigiertes OCR-Kennzeichen erzeugt (Schritt 60).

Das korrigierte OCR-Kennzeichen wird anschließend mittels des Prozessors 111 der Auswerteeinrichtung 110 mit der Buchungsdatenbank abgeglichen (Schritt 70). Falls es keine Übereinstimmung gibt, erfolgt eine benutzergestützte Weiterbearbeitung (Schritt 71). Wenn eine Übereinstimmung gefunden wird, wird davon ausgegangen, dass eine korrekte Buchung oder Mautbefreiung vorliegt (Schritt 80). Das Verfahren kann optional einen weiteren Schritt umfassen, in welchem eine Information von der Auswerteeinrichtung 110 an die Erfassungseinrichtung 100 gesendet wird, dass zu dem Kennzeichen ein Eintrag in der Buchungsdatenbank gefunden wurde (nicht dargestellt).

Wenn der Konfidenzwert oder alle der mehreren Konfidenzwerte gleich oder größer sind als der Schwellenwert, ist dies ein Indiz, dass die Texterkennung des Kennzeichens erfolgreich war und somit das OCR-Kennzeichen dem tatsächlichem Kennzeichen entspricht. Das OCR-Kennzeichen wird mithilfe des Prozessors 111 der Auswerteeinrichtung 110 mit der Buchungsdatenbank abgeglichen (Schritt 30). Wenn zu dem OCR-Kennzeichen ein Eintrag in der Buchungsdatenbank gefunden wird (Schritt 31), gibt es - wie bereits zuvor erwähnt - zwei Möglichkeiten: i) das OCR-Kennzeichen wurde korrekt ermittelt und es liegt eine ordnungsgemäße Buchung oder Mautbefreiung vor oder ii) ein falsch-positives Ergebnis. Das Verfahren kann optional einen weiteren Schritt umfassen, in welchem eine Information von der Auswerteeinrichtung 110 an die Erfassungseinrichtung 100 gesendet wird, dass zu dem Kennzeichen ein Eintrag in der Buchungsdatenbank gefunden wurde (nicht dargestellt).

Falls der Abgleich des OCR-Kennzeichens mit der Buchungsdatenbank kein Ergebnis liefert, besteht trotz des hohen Konfidenzwertes (bzw. der hohen Konfidenzwerte) die Möglichkeit, dass die OCR-Erkennung des Kennzeichens nicht das korrekte Kennzeichen ergeben hat. Von dem OCR-Kennzeichen wird dann mittels des Prozessors 111 der Auswerteeinrichtung 110 ein Hashwert berechnet (Schritt 40).

Der berechnete Hashwert wird mithilfe des Prozessors 111 der Auswerteeinrichtung 110 mit einer Korrekturdatenbank abgeglichen (Schritt 50). Wenn der Abgleich mit der Korrekturdatenbank keine Übereinstimmung ergibt, wird das OCR-Kennzeichen zu einer benutzergestützten Weiterbearbeitung weitergeleitet (Schritt 51). Falls zu dem berechneten Hashwert ein Eintrag in der Korrekturdatenbank gefunden wird, wird die dem gespeicherten Hashwert zugeordnete Korrekturanweisung (bzw. die Korrekturanweisungen) mittels des Prozessors 111 der Auswerteeinrichtung 110 auf das OCR-Kennzeichen angewendet und ein korrigiertes OCR-Kennzeichen erzeugt (Schritt 60).

Das korrigierte OCR-Kennzeichen wird anschließend mittels des Prozessors 111 der Auswerteeinrichtung 110 mit der Buchungsdatenbank abgeglichen (Schritt 70). Falls es immer noch keine Übereinstimmung gibt, erfolgt eine benutzergestützte Weiterbearbeitung (Schritt 71). Wenn eine Übereinstimmung gefunden wird, wird davon ausgegangen, dass eine korrekte Buchung oder Mautbefreiung vorliegt (Schritt 80). Das Verfahren kann optional einen weiteren Schritt umfassen, in welchem eine Information von der Auswerteeinrichtung 110 an die Erfassungseinrichtung 100 gesendet wird, dass zu dem Kennzeichen ein Eintrag in der Buchungsdatenbank gefunden wurde (nicht dargestellt).

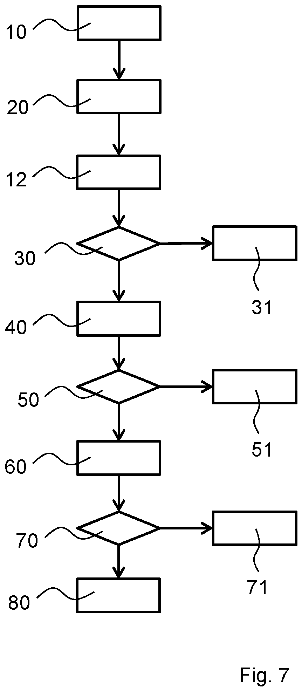

Fig. 7 zeigt eine weitere Ausführungsform des Verfahrens.

Mit der Kamera 101 der Erfassungseinrichtung 100 wird ein Foto erstellt, welches ein Kennzeichen eines Kraftfahrzeugs umfasst (Schritt 10). Mit dem Prozessor 102 der Erfassungseinrichtung 100 wird ausgehend von dem auf dem Foto abgebildeten Kennzeichen ein OCR-Kennzeichen erstellt (Schritt 20). Das OCR-Kennzeichen wird mithilfe der Kommunikationseinheit 103 der Erfassungseinrichtung 100 an die Kommunikationseinheit 112 der Auswerteeinrichtung 110 übermittelt (Schritt 12).

Das OCR-Kennzeichen wird mithilfe des Prozessors 111 der Auswerteeinrichtung 110 mit einer Buchungsdatenbank abgeglichen (Schritt 30). Wenn zu dem OCR-Kennzeichen ein Eintrag in der Buchungsdatenbank gefunden wird (Schritt 31), gibt es - wie bereits zuvor erwähnt - zwei Möglichkeiten: i) das OCR-Kennzeichen wurde korrekt ermittelt und es liegt eine ordnungsgemäße Buchung oder Mautbefreiung vor oder ii) ein falsch-positives Ergebnis. Das Verfahren kann optional einen weiteren Schritt umfassen, in welchem eine Information von der Auswerteeinrichtung 110 an die Erfassungseinrichtung 100 gesendet wird, dass zu dem Kennzeichen ein Eintrag in der Buchungsdatenbank gefunden wurde (nicht dargestellt).

Falls der Abgleich des OCR-Kennzeichens mit der Buchungsdatenbank kein Ergebnis liefert, besteht die Möglichkeit, dass die OCR-Erkennung des Kennzeichens nicht das korrekte Kennzeichen ergeben hat. Von dem OCR-Kennzeichen wird mittels des Prozessors 111 der Auswerteeinrichtung 110 ein Hashwert berechnet (Schritt 40).

Der berechnete Hashwert wird mithilfe des Prozessors 111 der Auswerteeinrichtung 110 mit einer Korrekturdatenbank abgeglichen (Schritt 50). Wenn der Abgleich mit der Korrekturdatenbank keine Übereinstimmung ergibt, wird das OCR-Kennzeichen zu einer benutzergestützten Weiterbearbeitung weitergeleitet (Schritt 51). Die benutzergestützte Weiterbearbeitung kann ein Anfordern des Fotos mit dem Kennzeichen umfassen, um einen Vergleich zwischen dem Kennzeichen und dem OCR-Kennzeichen vorzunehmen. Falls zu dem Hashwert ein Eintrag in der Korrekturdatenbank gefunden wird, wird die dem gespeicherten Hashwert zugeordnete Korrekturanweisung (bzw. die Korrekturanweisungen) mittels des Prozessors 111 der Auswerteeinrichtung 110 auf das OCR-Kennzeichen angewendet, um ein korrigiertes OCR-Kennzeichen zu erzeugen (Schritt 60).

Das korrigierte OCR-Kennzeichen wird anschließend mittels des Prozessors 111 der Auswerteeinrichtung 110 mit der Buchungsdatenbank abgeglichen (Schritt 70). Falls es keine Übereinstimmung gibt, erfolgt eine benutzergestützte Weiterbearbeitung (Schritt 71). Wenn eine Übereinstimmung gefunden wird, wird davon ausgegangen, dass eine korrekte Buchung oder Mautbefreiung vorliegt (Schritt 80).

Das Verfahren kann optional einen weiteren Schritt umfassen, in welchem eine Information von der Auswerteeinrichtung 110 an die Erfassungseinrichtung 100 gesendet wird, dass zu dem Kennzeichen ein Eintrag in der Buchungsdatenbank gefunden wurde (nicht dargestellt).

In einer alternativen Ausführungsform wird im Schritt 12 das OCR-Kennzeichen zusammen mit dem Foto von der Erfassungseinrichtung 100 an die Auswerteeinrichtung 110 übermittelt. In diesem Fall ist bei der benutzergestützten Weiterbearbeitung (Schritt 51) das Anfordern des Fotos nicht erforderlich.

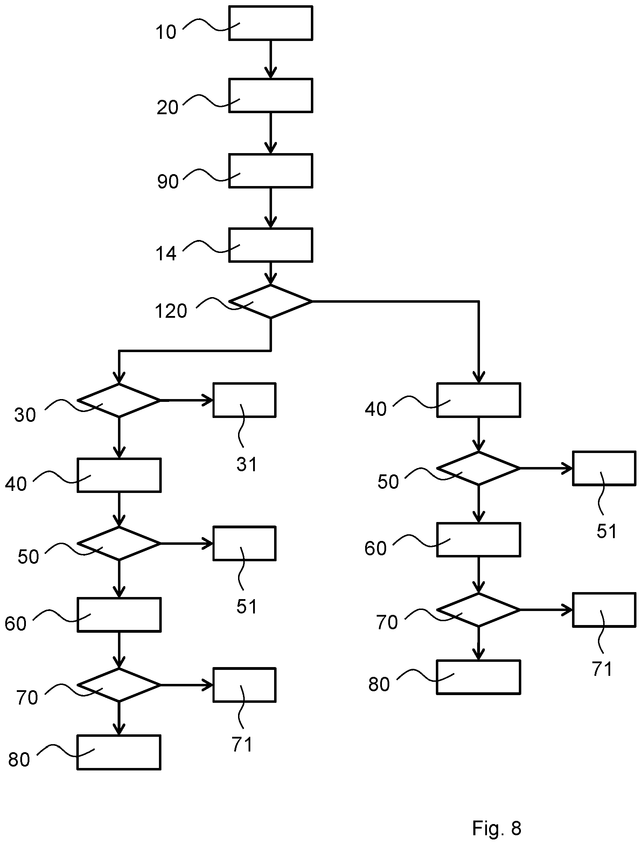

In Fig. 8 ist eine weitere Ausführungsform des Verfahrens dargestellt, welche nicht in den Schutzbereich der Ansprüche fällt.

Mit der Kamera 101 der Erfassungseinrichtung 100 wird ein Foto erstellt, welches ein Kennzeichen eines Kraftfahrzeugs umfasst (Schritt 10). Mit dem Prozessor 102 der Erfassungseinrichtung 100 wird ausgehend von dem auf dem Foto abgebildeten Kennzeichen ein OCR-Kennzeichen erstellt (Schritt 20).

Bei der Texterkennung des Kennzeichens wird mittels des Prozessors 102 der Erfassungseinrichtung 100 ein oder mehrere Konfidenzwerte berechnet (Schritt 90).

Das OCR-Kennzeichen und der Konfidenzwert (bzw. die Konfidenzwerte) werden mithilfe der Kommunikationseinheit 103 der Erfassungseinrichtung 100 an die Kommunikationseinheit 112 der Auswerteeinrichtung 110 übermittelt (Schritt 14).

Der Konfidenzwert bzw. die Konfidenzwerte werden mittels des Prozessors 111 der Auswerteeinrichtung 110 mit einem vorbestimmten Schwellenwert verglichen (Schritt 120).

Wenn der Konfidenzwert oder einer der mehreren Konfidenzwerte kleiner ist als der Schwellenwert, ist dies ein Indiz, dass die Texterkennung des Kennzeichens nicht erfolgreich war und somit das OCR-Kennzeichen nicht dem tatsächlichen Kennzeichen entspricht. In diesem Fall wird ausgehend von dem OCR-Kennzeichen mittels des Prozessors 111 der Auswerteeinrichtung 110 ein Hashwert berechnet (Schritt 40).

Der berechnete Hashwert wird mithilfe des Prozessors 111 der Auswerteeinrichtung 110 mit einer Korrekturdatenbank abgeglichen (Schritt 50). Wenn der Abgleich mit der Korrekturdatenbank keine Übereinstimmung ergibt, wird das OCR-Kennzeichen zu einer benutzergestützten Weiterbearbeitung weitergeleitet (Schritt 51). Die benutzergestützte Weiterbearbeitung kann das Anfordern des Fotos mit dem Kennzeichen umfassen, um einen Vergleich zwischen dem Kennzeichen und dem OCR-Kennzeichen vorzunehmen. Falls zu dem berechneten Hashwert ein Eintrag in der Korrekturdatenbank gefunden wird, wird die dem gespeicherten Hashwert zugeordnete Korrekturanweisung (bzw. die Korrekturanweisungen) mittels des Prozessors 111 der Auswerteeinrichtung 110 auf das OCR-Kennzeichen angewendet und ein korrigiertes OCR-Kennzeichen erzeugt (Schritt 60).

Das korrigierte OCR-Kennzeichen wird anschließend mittels des Prozessors 111 der Auswerteeinrichtung 110 mit der Buchungsdatenbank abgeglichen (Schritt 70). Falls es keine Übereinstimmung gibt, erfolgt eine benutzergestützte Weiterbearbeitung (Schritt 71). Wenn eine Übereinstimmung gefunden wird, wird davon ausgegangen, dass eine korrekte Buchung oder Mautbefreiung vorliegt (Schritt 80). Das Verfahren kann optional einen weiteren Schritt umfassen, in welchem eine Information von der Auswerteeinrichtung 110 an die Erfassungseinrichtung 100 gesendet wird, dass zu dem Kennzeichen ein Eintrag in der Buchungsdatenbank gefunden wurde (nicht dargestellt).

Wenn der Konfidenzwert oder alle der mehreren Konfidenzwerte gleich oder größer sind als der Schwellenwert, ist dies ein Indiz, dass die Texterkennung des Kennzeichens erfolgreich war und somit das OCR-Kennzeichen dem tatsächlichen Kennzeichen entspricht. Das OCR-Kennzeichen wird mithilfe des Prozessors 111 der Auswerteeinrichtung 110 mit der Buchungsdatenbank abgeglichen (Schritt 30). Wenn zu dem OCR-Kennzeichen ein Eintrag in der Buchungsdatenbank gefunden wird (Schritt 31), gibt es zwei Möglichkeiten: i) das OCR-Kennzeichen wurde korrekt ermittelt und es liegt eine ordnungsgemäße Buchung oder Mautbefreiung vor oder ii) ein falsch-positives Ergebnis. Das Verfahren kann optional einen weiteren Schritt umfassen, in welchem eine Information von der Auswerteeinrichtung 110 an die Erfassungseinrichtung 100 gesendet wird, dass zu dem Kennzeichen ein Eintrag in der Buchungsdatenbank gefunden wurde (nicht dargestellt).

Falls der Abgleich des OCR-Kennzeichens mit der Buchungsdatenbank kein Ergebnis liefert, besteht trotz des hohen Konfidenzwertes (bzw. der hohen Konfidenzwerte) die Möglichkeit, dass die OCR-Erkennung des Kennzeichens nicht das korrekte Kennzeichen ergeben hat. Von dem OCR-Kennzeichen wird mittels des Prozessors 111 der Auswerteeinrichtung 110 ein Hashwert berechnet (Schritt 40).

Der berechnete Hashwert wird mithilfe des Prozessors 111 der Auswerteeinrichtung 110 mit einer Korrekturdatenbank abgeglichen (Schritt 50). Wenn der Abgleich mit der Korrekturdatenbank keine Übereinstimmung ergibt, wird das OCR-Kennzeichen zu einer benutzergestützten Weiterbearbeitung weitergeleitet (Schritt 51). Falls zu dem berechneten Hashwert ein Eintrag in der Korrekturdatenbank gefunden wird, wird die dem gespeicherten Hashwert zugeordnete Korrekturanweisung (bzw. die Korrekturanweisungen) mittels des Prozessors 111 der Auswerteeinrichtung 110 auf das OCR-Kennzeichen angewendet und ein korrigiertes OCR-Kennzeichen erzeugt (Schritt 60).

Das korrigierte OCR-Kennzeichen wird anschließend mittels des Prozessors 111 der Auswerteeinrichtung 110 mit der Buchungsdatenbank abgeglichen (Schritt 70). Falls es immer noch keine Übereinstimmung gibt, erfolgt eine benutzergestützte Weiterbearbeitung (Schritt 71). Wenn eine Übereinstimmung gefunden wird, wird davon ausgegangen, dass eine korrekte Buchung oder Mautbefreiung vorliegt (Schritt 80). Das Verfahren kann optional einen weiteren Schritt umfassen, in welchem eine Information von der Auswerteeinrichtung 110 an die Erfassungseinrichtung 100 gesendet wird, dass zu dem Kennzeichen ein Eintrag in der Buchungsdatenbank gefunden wurde (nicht dargestellt).

In einer alternativen Ausführungsform werden im Schritt 14 das OCR-Kennzeichen und der Konfidenzwerte (bzw. die Konfidenzwerte) zusammen mit dem Foto von der Erfassungseinrichtung 100 an die Auswerteeinrichtung 110 übermittelt. In diesem Fall ist bei der benutzergestützten Weiterbearbeitung (Schritt 51) das Anfordern des Fotos nicht erforderlich.

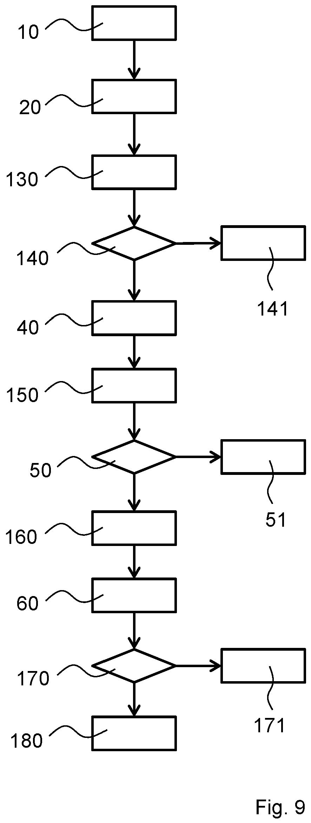

Eine weitere Ausführungsform des Verfahren ist in Fig. 9 gezeigt, welche nicht in den Schutzbereich der Ansprüche fällt.

Mit der Kamera 101 der Erfassungseinrichtung 100 wird ein Foto erstellt, welches ein Kennzeichen eines Kraftfahrzeugs umfasst (Schritt 10). Mit dem Prozessor 102 der Erfassungseinrichtung 100 wird ausgehend von dem auf dem Foto abgebildeten Kennzeichen ein OCR-Kennzeichen erstellt (Schritt 20).

Die weitere Kommunikationseinheit 104 der Erfassungseinrichtung 100 empfängt Fahrzeugdaten von einem in dem Kraftfahrzeug angeordneten Fahrzeuggerät (Schritt 130). Die Fahrzeugdaten umfassen ein Referenzkennzeichen. Das Referenzkennzeichen wird bei einer Einrichtung des Fahrzeuggeräts manuell von einem Nutzer des Kraftfahrzeugs eingegeben. Bei bestimmungsgemäßem Gebrauch (also korrekter Eingabe des Fahrzeugkennzeichens) entspricht das Referenzkennzeichen dem tatsächlichen Kennzeichen des Kraftfahrzeugs. Dem Empfang der Fahrzeugdaten kann eine Anfrage von der weiteren Kommunikationseinheit 104 an das Fahrzeuggerät vorausgehen, mit welcher die Übertragung der Fahrzeugdaten initiiert wird.

Auf die Reihenfolge der Schritte 10, 20 und 130 kommt es nicht an. Lediglich Schritt 10 muss zwingend vor Schritt 20 erfolgen. Die drei Schritte werden üblicherweise innerhalb recht kurzer Zeit durchgeführt (in der Größenordnung von einigen Millisekunden bis etwa 2 Sekunden). Die Reihenfolge kann von den Gegebenheiten der Straße, den Wetterbedingungen und/oder der Geschwindigkeit des Kraftfahrzeugs abhängen. Schritt 130 kann jedoch vor Schritt 10, zwischen Schritt 10 und Schritt 20, nach Schritt 20 oder auch zeitgleich zu einem der Schritte 10 oder 20 erfolgen. Nachdem die drei Schritte ausgeführt wurden, liegen anschließend das OCR-Kennzeichen und das Referenzkennzeichen in der Erfassungseinrichtung 100 vor und können dort verarbeitet werden.

Mittels des Prozessors 102 der Erfassungseinrichtung 100 wird das OCR-Kennzeichen mit dem Referenzkennzeichen verglichen (Schritt 140). Wenn der Vergleich positiv ist, also das OCR-Kennzeichen und das Referenzkennzeichen übereinstimmen, ist das Verfahren abgeschlossen (Schritt 141). Es wird davon ausgegangen, dass das Fahrzeuggerät des Fahrzeugs korrekt eingerichtet ist und der Fahrer am Mautverfahren teilnimmt. Es besteht die Möglichkeit, dass das Referenzkennzeichen bei der Einrichtung des Fahrzeuggeräts irrtümlich oder beabsichtigt falsch eingegeben wurde und somit nicht dem tatsächlichen Kennzeichen entspricht, und dass die OCR-Erkennung des Kennzeichens zu einem OCR-Kennzeichen führt, das mit dem falschen Referenzkennzeichen übereinstimmt. In diesem Fall würde fälschlicherweise von einer korrekten Teilnahme am Mautverfahren ausgegangen. Dieser Fall wird jedoch als äußerst unwahrscheinlich angesehen und hier nicht weiter betrachtet.

Wenn das OCR-Kennzeichen und das Referenzkennzeichen nicht übereinstimmen, wird mittels des Prozessors 102 der Erfassungseinrichtung 100 ausgehend von dem OCR-Kennzeichen ein Hashwert berechnet (Schritt 40).

Der berechnete Hashwert wird mithilfe der Kommunikationseinheit 103 der Erfassungseinrichtung 100 an die Kommunikationseinheit 112 der Auswerteeinrichtung 110 übermittelt (Schritt 150).

Der berechnete Hashwert wird mithilfe des Prozessors 111 der Auswerteeinrichtung 110 mit einer Korrekturdatenbank abgeglichen (Schritt 50). Wenn der Abgleich mit der Korrekturdatenbank keine Übereinstimmung ergibt, wird das OCR-Kennzeichen zu einer benutzergestützten Weiterbearbeitung weitergeleitet (Schritt 51). Die benutzergestützte Weiterbearbeitung kann das Übersenden des Fotos von dem Kennzeichen, des OCR-Kennzeichens und/oder des Referenzkennzeichens von der Erfassungseinrichtung 100 an die Auswerteeinrichtung 110 umfassen.

Falls zu dem berechneten Hashwert ein Eintrag in der Korrekturdatenbank gefunden wird, wird die dem gespeicherten Hashwert zugeordnete Korrekturanweisung (bzw. die Korrekturanweisungen) mit der Kommunikationseinheit 112 der Auswerteeinrichtung 110 an die Kommunikationseinheit 103 der Erfassungseinrichtung 100 übermittelt (Schritt 160).

Die Korrekturanweisung (bzw. die Korrekturanweisungen) wird mittels des Prozessors 102 der Erfassungseinrichtung 100 auf das OCR-Kennzeichen angewendet und ein korrigiertes OCR-Kennzeichen erzeugt (Schritt 60).

Mittels des Prozessors 102 der Erfassungseinrichtung 100 wird das korrigierte OCR-Kennzeichen mit dem Referenzkennzeichen verglichen (Schritt 170). Wenn der Vergleich positiv ist, also das korrigierte OCR-Kennzeichen und das Referenzkennzeichen übereinstimmen, ist das Verfahren abgeschlossen (Schritt 171). Es wird davon ausgegangen, dass das Fahrzeuggerät des Fahrzeugs korrekt eingerichtet ist und der Fahrer am Mautverfahren teilnimmt.

Wenn das korrigierte OCR-Kennzeichen und das Referenzkennzeichen nicht übereinstimmen, wird zu einer benutzergestützten Weiterbearbeitung weitergeleitet (Schritt 180). Die benutzergestützte Weiterbearbeitung kann das Übersenden des Fotos von dem Kennzeichen, des OCR-Kennzeichens, des korrigierten OCR-Kennzeichens und/oder des Referenzkennzeichens von der Erfassungseinrichtung 100 an die Auswerteeinrichtung 110 umfassen.

Das Verfahren kann nach Schritt 20 optional die Berechnung eines oder mehrerer Konfidenzwerte zu der Texterkennung des Kennzeichens mittels des Prozessors 102 der Erfassungseinrichtung 100 umfassen. Bei einer benutzergestützten Weiterbearbeitung kann der Konfidenzwert (bzw. die Konfidenzwerte) ein Indiz für die Verlässlichkeit der Texterkennung sein.

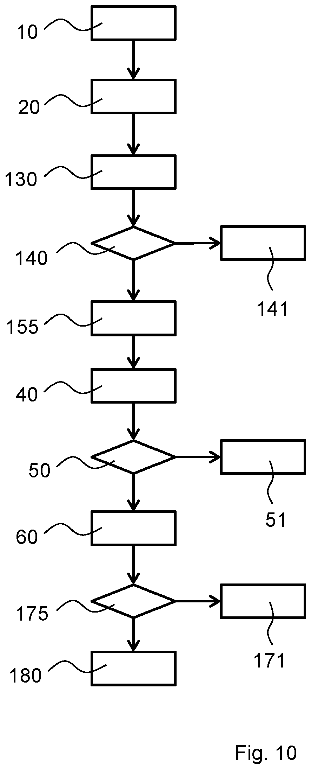

Fig. 10 zeigt eine weitere Ausführungsform des Verfahrens, welche nicht in den Schutzbereich der Ansprüche fällt.

Mit der Kamera 101 der Erfassungseinrichtung 100 wird ein Foto erstellt, welches ein Kennzeichen eines Kraftfahrzeugs umfasst (Schritt 10).

Mit dem Prozessor 102 der Erfassungseinrichtung 100 wird ausgehend von dem Foto des Kennzeichens ein OCR-Kennzeichen erstellt (Schritt 20).

Die weitere Kommunikationseinheit 104 der Erfassungseinrichtung 100 empfängt Fahrzeugdaten von einem in dem Kraftfahrzeug angeordneten Fahrzeuggerät (Schritt 130). Die Fahrzeugdaten umfassen ein Referenzkennzeichen. Das Referenzkennzeichen wird bei einer Einrichtung des Fahrzeuggeräts manuell von einem Nutzer eingegeben. Bei bestimmungsgemäßem Gebrauch entspricht das Referenzkennzeichen dem tatsächlichen Kennzeichen des Kraftfahrzeugs. Dem Empfang der Fahrzeugdaten kann eine Anfrage von der weiteren Kommunikationseinheit 104 an das Fahrzeuggerät vorausgehen, mit welcher die Übertragung der Fahrzeugdaten initiiert wird.

Wie bei der Ausführungsform nach Fig. 9 kommt es auf die Reihenfolge der Schritte 10, 20 und 130 nicht an. Nachdem die drei Schritte in beliebiger Reihenfolge ausgeführt wurden, liegen anschließend das OCR-Kennzeichen und das Referenzkennzeichen in der Erfassungseinrichtung 100 vor und können dort verarbeitet werden.

Mittels des Prozessors 102 der Erfassungseinrichtung 100 wird das OCR-Kennzeichen mit dem Referenzkennzeichen verglichen (Schritt 140). Wenn der Vergleich positiv ist, also das OCR-Kennzeichen und das Referenzkennzeichen übereinstimmen, ist das Verfahren abgeschlossen (Schritt 141).

Wenn das OCR-Kennzeichen und das Referenzkennzeichen nicht übereinstimmen, werden das OCR-Kennzeichen und das Referenzkennzeichen mithilfe der Kommunikationseinheit 103 der Erfassungseinrichtung 100 an die Kommunikationseinheit 112 der Auswerteeinrichtung 110 übermittelt (Schritt 155).

Mittels des Prozessors 111 der Auswerteeinrichtung 110 wird ausgehend von dem OCR-Kennzeichen ein Hashwert berechnet (Schritt 40).

Der berechnete Hashwert wird mithilfe des Prozessors 111 der Auswerteeinrichtung 110 mit einer Korrekturdatenbank abgeglichen (Schritt 50).

Wenn der Abgleich mit der Korrekturdatenbank keine Übereinstimmung ergibt, wird das OCR-Kennzeichen zu einer benutzergestützten Weiterbearbeitung weitergeleitet (Schritt 51). Die benutzergestützte Weiterbearbeitung kann das Übersenden des Fotos mit dem Kennzeichen von der Erfassungseinrichtung 100 an die Auswerteeinrichtung 110 umfassen.

Falls zu dem berechneten Hashwert ein Eintrag in der Korrekturdatenbank gefunden wird, wird die dem gespeicherten Hashwert zugeordnete Korrekturanweisung (bzw. die Korrekturanweisungen) mittels des Prozessors 111 der Auswerteeinrichtung 110 auf das OCR-Kennzeichen angewendet und ein korrigiertes OCR-Kennzeichen erzeugt (Schritt 60).

Das korrigierte OCR-Kennzeichen wird mittels des Prozessors 111 der Auswerteeinrichtung 110 mit dem Referenzkennzeichen verglichen (Schritt 175).

Wenn der Vergleich positiv ist, also das korrigierte OCR-Kennzeichen und das Referenzkennzeichen übereinstimmen, ist das Verfahren abgeschlossen (Schritt 171). Es wird davon ausgegangen, dass das Fahrzeuggerät des Fahrzeugs korrekt eingerichtet ist und das Fahrzeug am Mautverfahren teilnimmt. Das Verfahren kann optional einen Schritt umfassen, in welchem von der Auswerteeinrichtung 110 eine Information über das positive Ergebnis des Vergleichs an die Erfassungseinrichtung 100 übermittelt wird.

Wenn das korrigierte OCR-Kennzeichen und das Referenzkennzeichen nicht übereinstimmen, wird zu einer benutzergestützten Weiterbearbeitung weitergeleitet (Schritt 180). Die benutzergestützte Weiterbearbeitung kann das Übersenden des Fotos mit dem Kennzeichen von der Erfassungseinrichtung 100 an die Auswerteeinrichtung 110 umfassen. Das Verfahren kann optional einen Schritt umfassen, in welchem von der Auswerteeinrichtung 110 eine Information über das negative Ergebnis des Vergleichs an die Erfassungseinrichtung 100 übermittelt wird.

Das Verfahren kann nach Schritt 20 optional die Berechnung eines oder mehrerer Konfidenzwerte zu der Texterkennung des Kennzeichens mittels des Prozessors 102 der Erfassungseinrichtung 100 umfassen. Bei einer benutzergestützten Weiterbearbeitung kann der Konfidenzwert (bzw. die Konfidenzwerte) ein Indiz für die Verlässlichkeit der Texterkennung sein.

In einer alternativen Ausführungsform werden im Schritt 155 das OCR-Kennzeichen und das Referenzkennzeichen zusammen mit dem Foto des Kennzeichens von der Erfassungseinrichtung 100 an die Auswerteeinrichtung 110 übermittelt. In diesem Fall ist bei der benutzergestützten Weiterbearbeitung (Schritte 51 oder 171) ein Übersenden des Fotos nicht erforderlich.

Das hier offenbarten Ausführungsformen bergen das (in der Praxis geringe) Risiko, ein korrektes Kennzeichen aufgrund der Korrekturdatenbank zu verändern. Gemäß dem obigen Beispiel kann ein Kennzeichen "B TC 123" von der Texterkennung fälschlicherweise als "B TO 123" erkannt werden. Wenn hierzu eine benutzergestützte Korrektur erfolgt und eine Korrekturanweisung erstellt wird, gibt es in der Korrekturdatenbank anschließend den Hashwert zu dem falschen OCR-Kennzeichen ("B TO 123") zusammen mit einer Korrekturanweisung (z. B. ersetze "O" durch "C" oder ersetze das vierte Zeichen durch "C"). Wenn nun ein Kennzeichen eines anderen Fahrzeugs tatsächlich "B TO 123" ist, erfasst wird und anschließend korrekterweise von der Texterkennung als "B TO 123" erkannt wird, besteht die Möglichkeit, dass es nach dem Abgleich mit der Korrekturdatenbank zu "B TC 123" geändert wird.

Um solche Fehler zu vermeiden, ist nach einer weiteren Ausführungsform vorgesehen, dass zusammen mit dem Kennzeichen wenigstens ein Fahrzeugmerkmal erfasst und beim Abgleich mit der Korrekturdatenbank berücksichtigt wird.

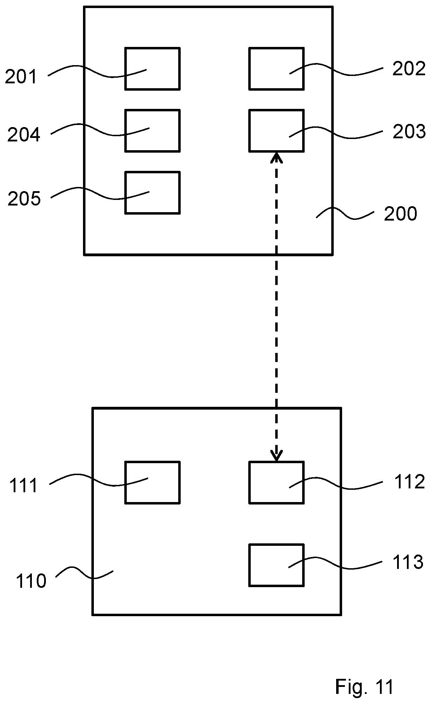

Fig. 11 zeigt eine schematische Darstellung einer weiteren Ausführungsform eines Systems, das konfiguriert ist, einige der hier offenbarten Ausführungsformen des Verfahrens auszuführen.

Das System weist eine Erfassungseinrichtung 200 und eine Auswerteeinrichtung 110 auf. Die Auswerteeinrichtung 110 ist räumlich von der Erfassungseinrichtung 200 getrennt.

Die Erfassungseinrichtung 200 weist eine Kamera 201 (z. B. eine Digitalkamera) zum Aufnehmen einer Abbildung eines Kennzeichens auf. Die Abbildung des Kennzeichens kann Teil einer Abbildung eines Kraftfahrzeugs sein, beispielsweise eines Lastkraftwagens. Die Abbildung kann erzeugt werden, indem die Frontseite des Kraftfahrzeugs (an welcher üblicherweise das Kennzeichen angeordnet ist) fotografiert wird.

Des Weiteren weist die Erfassungseinrichtung 200 einen Prozessor 202 (z. B. eine CPU oder einen Mikrocontroller), eine Kommunikationseinheit 203 und eine Erfassungseinheit 205 auf.

Die Erfassungseinheit 205 ist eingerichtet, ein Fahrzeugmerkmal zu bestimmen. Das Fahrzeugmerkmal kann der Fahrzeugtyp, die Anzahl der Achsen einer Zugmaschine, eine Fahrzeugdimension wie Länge, Breite oder Höhe des Fahrzeugs, die Farbe des Fahrzeugs, die Position des Kennzeichens am Fahrzeug und eine beliebige Kombination der vorgenannten Merkmale sein. Der Fahrzeugtyp kann beispielsweise anhand der Geometrie des Fahrzeugs bestimmt werden, z. B. aus der Frontansicht des Fahrzeugs und/oder aus dem Profil des Fahrzeugs. Auch besondere Merkmale eines Fahrzeugs wie beispielsweise herausstehende Spiegel oder Aufbauten wie bei einem Kran oder einem Autotransporter können mit der Erfassungseinheit 205 als Fahrzeugmerkmal erfasst werden. Die Erfassungseinheit 205 kann als Kamera (z. B. Digitalkamera), als Laserscanner (LIDAR), Time-of-flight-Kamera, Stereokamera oder als eine Kombination hiervon ausgebildet sein.

Die Erfassungseinrichtung 200 kann optional eine weitere Kommunikationseinheit 204 aufweisen.

Die Erfassungseinrichtung 200 kann als eine die Straße überspannende Kontrollbrücke oder als eine am Straßenrand postierte Kontrollsäule ausgeführt sein.

Die Auswerteeinrichtung 110 weist eine Kommunikationseinheit 112, einen Prozessor 111 (z. B. eine CPU oder einen Mikrocontroller) und einen Speicher 113 (z. B. eine Festplatte oder einen Flashspeicher) auf. Die Auswerteeinrichtung 110 kann als Server ausgeführt sein.

Die Kommunikationseinheit 203 der Erfassungseinrichtung 200 und die Kommunikationseinheit 112 der Auswerteeinrichtung 110 können konfiguriert sein, Daten und/oder Signale in beide Richtungen drahtlos miteinander auszutauschen, beispielsweise über eine Funkschnittstelle wie Mobilfunk, z. B. GSM, UMTS oder LTE (GSM - Global System for Mobile Communications, UMTS - Universal Mobile Telecommunications System, LTE - Long Term Evolution). Es können Daten und/oder Signale von der Kommunikationseinheit 203 der Erfassungseinrichtung 200 an die Kommunikationseinheit 112 der Auswerteeinrichtung 110 gesendet werden. Es ist auch möglich, dass Daten und/oder Signale von der Kommunikationseinheit 112 der Auswerteeinrichtung 110 an die Kommunikationseinheit 203 der Erfassungseinrichtung 200 gesendet werden.

Die weitere Kommunikationseinheit 204 der Erfassungseinrichtung 200 kann konfiguriert sein, Daten und/oder Signale über eine Funkschnittstelle mit einem in einem Fahrzeug angeordneten Fahrzeuggerät auszutauschen, also Daten und/oder Signale an das Fahrzeuggerät zu senden und/oder von dem Fahrzeuggerät zu empfangen. Insbesondere kann die weitere Kommunikationseinheit 204 der Erfassungseinrichtung 200 konfiguriert sein, eine Anfrage an das Fahrzeuggerät senden, mit welcher das Fahrzeuggerät aufgefordert wird, Fahrzeugdaten an die weitere Kommunikationseinheit 204 der Erfassungseinrichtung 200 zu übermitteln. Die Fahrzeugdaten können das Kennzeichen des Fahrzeugs umfassen. Die Funkschnittstelle der weiteren Kommunikationseinheit 204 der Erfassungseinrichtung 200 kann als DSRC-Schnittstelle ausgeführt sein.

Der Speicher 113 der Auswerteeinrichtung 110 kann eine Korrekturdatenbank und/oder eine Buchungsdatenbank enthalten. Die Korrekturdatenbank und die Buchungsdatenbank können auch in zwei verschiedenen Speichermedien gespeichert sein. Es kann auch vorgesehen sein, dass die Korrekturdatenbank und die Buchungsdatenbank in verschiedenen Rechnersystemen (mit jeweils eigenen Prozessoren und Speicherelementen) implementiert sind (nicht dargestellt).

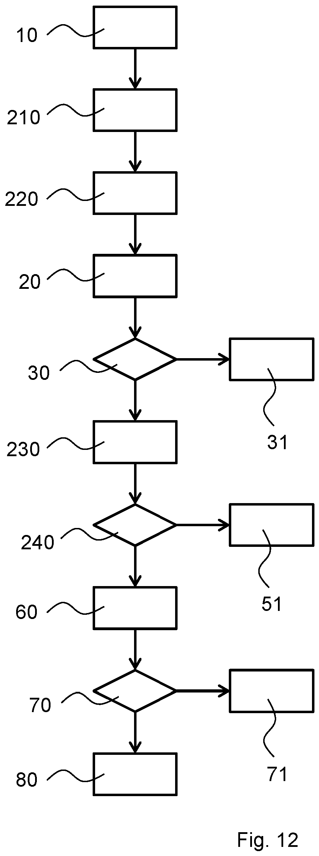

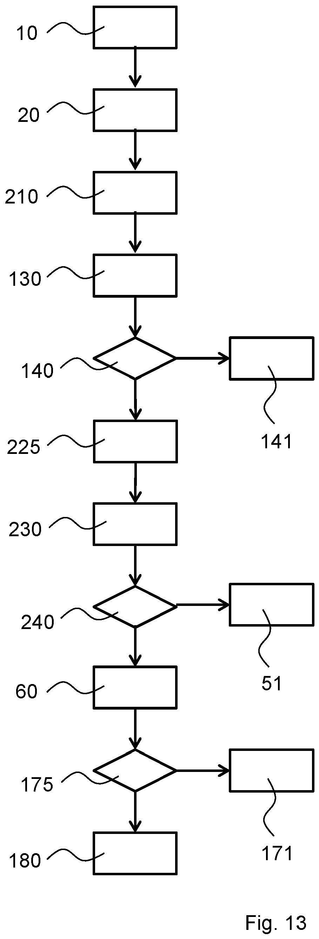

Fahrzeugmerkmale, die sich aus der Frontansicht des Fahrzeugs bestimmen lassen, insbesondere der Fahrzeugtyp, eine Fahrzeugdimension wie Breite oder Höhe des Fahrzeugs, die Farbe des Fahrzeugs, die Position des Kennzeichens am Fahrzeug, abstehende Spiegel und eine beliebige Kombination der vorgenannten Merkmale, können auch mittels der Kamera 201 bestimmt werden. Zur Bestimmung dieser Fahrzeugmerkmale ist die Erfassungseinheit 205 nicht erforderlich. Für diese Fahrzeugmerkmale können die im Folgenden unter Bezug auf die Fig. 12 und 13 beschriebenen Verfahren auch mit dem System nach Fig. 4 ausgeführt werden.

Fig. 12 zeigt eine weitere Ausführungsform des Verfahrens.

Mit der Kamera 201 der Erfassungseinrichtung 200 wird ein Foto erstellt, welches ein Kennzeichen eines Kraftfahrzeugs umfasst (Schritt 10).

Ein Fahrzeugmerkmal des Kraftfahrzeugs wird mittels der Erfassungseinheit 205 der Erfassungseinrichtung 200 erfasst (Schritt 210). In Schritt 210 können auch mehrere Fahrzeugmerkmale erfasst werden. Beispielsweise kann ein Laserscan des Fahrzeugs durchgeführt werden, während das Fahrzeug die Erfassungseinrichtung 200 passiert (z. B. unter der Erfassungseinrichtung 200 durchfährt oder an ihr vorbeifährt).

Auf die Reihenfolge der Schritte 10 und 210 kommt es nicht an. Schritt 210 kann auch vor Schritt 10 ausgeführt werden. Es kann auch vorgesehen sein, dass die beiden Schritte 10 und 210 zeitgleich ausgeführt werden.

Das Foto und das Fahrzeugmerkmal (bzw. die Fahrzeugmerkmale) werden mithilfe der Kommunikationseinheit 203 der Erfassungseinrichtung 200 an die Kommunikationseinheit 112 der Auswerteeinrichtung 110 übermittelt (Schritt 220).

Mit dem Prozessor 111 der Auswerteeinrichtung 110 wird ausgehend von dem Foto des Kennzeichens ein OCR-Kennzeichen erstellt (Schritt 20). Das OCR-Kennzeichen liegt dann in textcodierter Form vor und kann von dem Prozessor 111 der Auswerteeinrichtung 110 weiterverarbeitet werden.

Das OCR-Kennzeichen wird mithilfe des Prozessors 111 der Auswerteeinrichtung 110 mit einer Buchungsdatenbank abgeglichen (Schritt 30). Die Buchungsdatenbank enthält gespeicherte Kennzeichen von Fahrzeugen (im Klartext). Wenn zu dem OCR-Kennzeichen ein Eintrag in der Buchungsdatenbank gefunden wird (Schritt 31), gibt es zwei Möglichkeiten: i) das OCR-Kennzeichen wurde korrekt ermittelt und es liegt eine ordnungsgemäße Buchung oder Mautbefreiung vor oder ii) ein falsch-positives Ergebnis. Das Verfahren kann optional einen weiteren Schritt umfassen, in welchem eine Information von der Auswerteeinrichtung 110 an die Erfassungseinrichtung 200 gesendet wird, dass zu dem Kennzeichen ein Eintrag in der Buchungsdatenbank gefunden wurde (nicht dargestellt).

Falls der Abgleich des OCR-Kennzeichens mit der Buchungsdatenbank kein Ergebnis liefert, besteht die Möglichkeit, dass die OCR-Erkennung des Kennzeichens nicht das korrekte Kennzeichen ergeben hat.

Mittels des Prozessors 111 der Auswerteeinrichtung 110 erfolgt eine Hashwertberechnung (Schritt 230). Für die Hashwertberechnung wird ausgehend von dem OCR-Kennzeichen ein Hashwert berechnet. Ergänzend kann vorgesehen sein, dass ausgehend von dem Fahrzeugmerkmal (bzw. den Fahrzeugmerkmalen) ein weiterer Hashwert berechnet wird. Alternativ kann auch vorgesehen sein, dass ein Tupel gebildet wird, welches das OCR-Kennzeichen und das Fahrzeugmerkmal (bzw. die Fahrzeugmerkmale) umfasst. In diesem Fall wird der Hashwert ausgehend von dem Tupel gebildet. Als Ergebnis der Hashwertberechnung liegen also vor: A) der Hashwert zu dem OCR-Kennzeichen und das Fahrzeugmerkmal (bzw. die Fahrzeugmerkmale) im Klartext, B) der Hashwert zu dem OCR-Kennzeichen und der weitere Hashwert zu dem Fahrzeugmerkmal (bzw. den Fahrzeugmerkmalen) oder C) der Hashwert zu dem Tupel umfassend das OCR-Kennzeichen und das Fahrzeugmerkmal (bzw. die Fahrzeugmerkmale).

Im nächsten Schritt erfolgt ein Abgleich des Ergebnisses der Hashwertberechnung mit einer Korrekturdatenbank mithilfe des Prozessors 111 der Auswerteeinrichtung 110 (Schritt 240). Die Korrekturdatenbank ist in Anlehnung an die Hashwertberechnung aufgebaut. In einer ersten Ausführungsform enthält die Korrekturdatenbank mehrere gespeicherte Hashwerte von Kennzeichen jeweils zusammen mit einem Fahrzeugmerkmal (oder ggf. mehreren Fahrzeugmerkmalen) im Klartext (entspricht dem Ergebnis A der Hashwertberechnung). Jedem gespeicherten Hashwert mit Fahrzeugmerkmal ist eine Kennzeicheninformation zugeordnet. Die Kennzeicheninformation umfasst entweder mindestens eine Korrekturanweisung (wie bereits in der vorliegenden Anmeldung beschrieben) oder eine Korrektheitsbestätigung. Die Korrektheitsbestätigung gibt an, dass das zu dem berechneten Hashwert und dem Fahrzeugmerkmal (bzw. den Fahrzeugmerkmalen) gehörende OCR-Kennzeichen korrekt von der Texterkennung erkannt wurde. In einer zweiten Ausführungsform enthält die Korrekturdatenbank mehrere gespeicherte Hashwerte von Kennzeichen jeweils zusammen mit dem weiteren Hashwert zu dem Fahrzeugmerkmal (bzw. den Fahrzeugmerkmalen) (entspricht dem Ergebnis B der Hashwertberechnung). Jedem Paar bestehend aus dem gespeicherten Hashwert und dem weiteren Hashwert ist wiederum eine Kennzeicheninformation zugeordnet. In einer dritten Ausführungsform enthält die Korrekturdatenbank mehrere gespeicherte Hashwerte, die von Tupeln umfassend das OCR-Kennzeichen und das Fahrzeugmerkmal (bzw. die Fahrzeugmerkmale) abgeleitet sind (entspricht dem Ergebnis C der Hashwertberechnung). Jedem gespeicherten Hashwert der Tupel ist eine Kennzeicheninformation zugeordnet. Für die zweite und dritte Ausführungsform gelten die Ausführungen zu der Kennzeicheninformation entsprechend.

Wenn der Abgleich mit der Korrekturdatenbank keine Übereinstimmung ergibt oder der Abgleich positiv ist und als Ergebnis des Abgleichs die Korrektheit des OCR-Kennzeichens bestätigt wird, wird das OCR-Kennzeichen zu einer benutzergestützten Weiterbearbeitung weitergeleitet (Schritt 51). Falls das OCR-Kennzeichen korrekt sein sollte und das Kennzeichen nicht in der Buchungsdatenbank gefunden wurde, kann ein Versuch von Mautbetrug vorliegen, dem nachgegangen wird.

Falls der Abgleich positiv ist und eine Korrekturanweisung (oder mehrere Korrekturanweisungen) zu dem OCR-Kennzeichen vorliegen, so wird die Korrekturanweisung (bzw. die Korrekturanweisungen) mithilfe des Prozessors 111 der Auswerteeinrichtung 100 auf das OCR-Kennzeichen angewendet und ein korrigiertes OCR-Kennzeichen erzeugt (Schritt 60).

Das korrigierte OCR-Kennzeichen wird anschließend mittels des Prozessors 111 der Auswerteeinrichtung 110 mit der Buchungsdatenbank abgeglichen (Schritt 70). Falls es keine Übereinstimmung gibt, erfolgt eine benutzergestützte Weiterbearbeitung (Schritt 71). Wenn nun eine Übereinstimmung gefunden wird, wird davon ausgegangen, dass eine korrekte Buchung oder Mautbefreiung vorliegt (Schritt 80). Das Verfahren kann optional einen weiteren Schritt umfassen, in welchem eine Information von der Auswerteeinrichtung 110 an die Erfassungseinrichtung 100 gesendet wird, dass zu dem Kennzeichen ein Eintrag in der Buchungsdatenbank gefunden wurde (nicht dargestellt).

Eine weitere Ausführungsform des Verfahrens ist in Fig. 13 dargestellt, welche nicht in den Schutzbereich der Ansprüche fällt.

Mit der Kamera 201 der Erfassungseinrichtung 200 wird ein Foto erstellt, welches ein Kennzeichen eines Kraftfahrzeugs umfasst (Schritt 10).

Mit dem Prozessor 202 der Erfassungseinrichtung 200 wird ausgehend von dem Foto des Kennzeichens ein OCR-Kennzeichen erstellt (Schritt 20).

Ein Fahrzeugmerkmal des Kraftfahrzeugs wird mittels der Erfassungseinheit 205 der Erfassungseinrichtung 200 erfasst (Schritt 210). In Schritt 210 können auch mehrere Fahrzeugmerkmale erfasst werden. Beispielsweise kann ein Laserscan des Fahrzeugs durchgeführt werden, während das Fahrzeug die Erfassungseinrichtung 200 passiert (z. B. unter der Erfassungseinrichtung 200 durchfährt oder an ihr vorbeifährt).

Die weitere Kommunikationseinheit 204 der Erfassungseinrichtung 200 empfängt (z. B. im Wege einer Kurzstrecken-Funkkommunikation, beispielsweise DSRC) Fahrzeugdaten von einem in dem Kraftfahrzeug angeordneten Fahrzeuggerät (Schritt 130). Die Fahrzeugdaten umfassen ein Referenzkennzeichen. Das Referenzkennzeichen wird bei einer Einrichtung des Fahrzeuggeräts manuell von einem Nutzer eingegeben. Bei bestimmungsgemäßem Gebrauch (also korrekter Eingabe des Fahrzeugkennzeichens) entspricht das Referenzkennzeichen dem tatsächlichen Kennzeichen des Kraftfahrzeugs. Dem Empfang der Fahrzeugdaten kann eine Anfrage von der weiteren Kommunikationseinheit 204 an das Fahrzeuggerät vorausgehen, mit welcher die Übertragung der Fahrzeugdaten initiiert wird.

Auf die Reihenfolge der Schritte 10, 20, 130 und 210 kommt es nicht an, mit der Ausnahme, dass Schritt 20 erst ausgeführt werden kann, nachdem in Schritt 10 ein Foto mit dem Kennzeichen erstellt wurde. Die Reihenfolge der anderen Schritte ist jedoch beliebig und kann ggf. an die jeweiligen Bedingungen angepasst werden. Es kann auch vorgesehen sein, dass einige der Schritte zeitgleich ausgeführt werden. Nachdem diese vier Schritte ausgeführt wurden, liegen das Foto mit dem Kennzeichen, das OCR-Kennzeichen, das Referenzkennzeichen und wenigstens ein Fahrzeugmerkmal in der Erfassungseinrichtung 200 vor und können dort weiterverarbeitet werden.

Mittels des Prozessors 202 der Erfassungseinrichtung 200 wird das OCR-Kennzeichen mit dem Referenzkennzeichen verglichen (Schritt 140). Wenn der Vergleich positiv ist, also das OCR-Kennzeichen und das Referenzkennzeichen übereinstimmen, ist das Verfahren abgeschlossen (Schritt 141).

Wenn das OCR-Kennzeichen und das Referenzkennzeichen nicht übereinstimmen, werden das OCR-Kennzeichen, das Referenzkennzeichen und das Fahrzeugmerkmal (bzw. die Fahrzeugmerkmale) mithilfe der Kommunikationseinheit 203 der Erfassungseinrichtung 200 an die Kommunikationseinheit 112 der Auswerteeinrichtung 110 übermittelt (Schritt 225).

Mittels des Prozessors 111 der Auswerteeinrichtung 110 erfolgt eine Hashwertberechnung (Schritt 230). Die Hashwertberechnung umfasst die Optionen, welche bereits im Zusammenhang mit Fig. 12 beschrieben wurden.

Alternativ kann die Hashwertberechnung mittels des Prozessors 202 der Erfassungseinrichtung 200 erfolgen, wobei in diesem Fall anstelle des OCR-Kennzeichens, gegebenenfalls auch anstelle der Fahrzeugmerkmale soweit diese Fahrzeugmerkmale Teil der Hashwertberechnung waren, der berechnete Hashwert oder die berechneten Hashwerte von der Erfassungseinrichtung 200 an die Auswerteeinrichtung 110 übermittelt werden.

Im nächsten Schritt erfolgt ein Abgleich des Ergebnisses der Hashwertberechnung, d. h. des Hashwertes oder der Hashwerte, mit einer Korrekturdatenbank mithilfe des Prozessors 111 der Auswerteeinrichtung 110 (Schritt 240). Die Korrekturdatenbank ist in Anlehnung an die Hashwertberechnung aufgebaut, wie ebenfalls bereits in Zusammenhang mit Fig. 12 beschrieben.

Wenn der Abgleich mit der Korrekturdatenbank keine Übereinstimmung ergibt oder als Ergebnis des Abgleichs die Korrektheit des OCR-Kennzeichens bestätigt wird, wird das OCR-Kennzeichen zu einer benutzergestützten Weiterbearbeitung weitergeleitet (Schritt 51). Falls das OCR-Kennzeichen korrekt sein sollte und das Kennzeichen nicht mit dem Referenzkennzeichen übereinstimmt, kann ein Versuch von Mautbetrug vorliegen, dem nachgegangen wird. Die benutzergestützte Weiterbearbeitung kann das Übersenden des Fotos mit dem Kennzeichen von der Erfassungseinrichtung 200 an die Auswerteeinrichtung 110 umfassen.

Falls der Abgleich positiv ist und eine Korrekturanweisung (oder mehrere Korrekturanweisungen) zu dem OCR-Kennzeichen vorliegen, so wird die Korrekturanweisung (bzw. die Korrekturanweisungen) mithilfe des Prozessors 111 der Auswerteeinrichtung 100 auf das OCR-Kennzeichen angewendet und ein korrigiertes OCR-Kennzeichen erzeugt (Schritt 60).

Das korrigierte OCR-Kennzeichen wird mittels des Prozessors 111 der Auswerteeinrichtung 110 mit dem Referenzkennzeichen verglichen (Schritt 175).

Für den alternativen Fall, dass die Hashwertberechnung durch den Prozessor 202 der Erfassungseinrichtung 200 erfolgt, findet dieser Vergleich durch den Prozessor 202 der Erfassungseinrichtung 200 statt, die zuvor das korrigierte OCR-Kennzeichen von der Auswerteinrichtung 110 übermittelt bekommen hat.

Wenn der Vergleich positiv ist, also das korrigierte OCR-Kennzeichen und das Referenzkennzeichen übereinstimmen, ist das Verfahren abgeschlossen (Schritt 171). Es wird davon ausgegangen, dass das Fahrzeuggerät des Fahrzeugs korrekt eingerichtet ist und das Fahrzeug am Mautverfahren teilnimmt. Das Verfahren kann optional einen Schritt umfassen, in welchem von der Auswerteeinrichtung 110 eine Information über das positive Ergebnis des Vergleichs an die Erfassungseinrichtung 200 übermittelt wird.

Wenn das korrigierte OCR-Kennzeichen und das Referenzkennzeichen nicht übereinstimmen, wird zu einer benutzergestützten Weiterbearbeitung weitergeleitet (Schritt 180). Die benutzergestützte Weiterbearbeitung kann das Übersenden des Fotos von dem Kennzeichen von der Erfassungseinrichtung 200 an die Auswerteeinrichtung 110 umfassen. Das Verfahren kann optional einen Schritt umfassen, in welchem von der Auswerteeinrichtung 110 eine Information über das negative Ergebnis des Vergleichs an die Erfassungseinrichtung 200 übermittelt wird.

Das Verfahren kann nach Schritt 20 optional die Berechnung eines oder mehrerer Konfidenzwerte zu der Texterkennung des Kennzeichens mittels des Prozessors 202 der Erfassungseinrichtung 200 umfassen. Bei einer benutzergestützten Weiterbearbeitung kann der Konfidenzwert (bzw. die Konfidenzwerte) ein Indiz für die Verlässlichkeit der Texterkennung sein.

In einer alternativen Ausführungsform werden im Schritt 155 das OCR-Kennzeichen, das Referenzkennzeichen und das Fahrzeugmerkmal (bzw. die Fahrzeugmerkmale) zusammen mit dem Foto des Kennzeichens von der Erfassungseinrichtung 200 an die Auswerteeinrichtung 110 übermittelt. In diesem Fall ist bei der benutzergestützten Weiterbearbeitung (Schritte 51 oder 171) ein Übersenden des Fotos nicht erforderlich.

Die hier offenbarten Ausführungsformen des Verfahrens umfassen Schritte einer benutzergesteuerten Weiterbearbeitung. In einem ersten Fall ist die benutzergesteuerte Weiterbearbeitung erforderlich, wenn der Abgleich des Hashwerts (oder des Hashwerts und des/der Fahrzeugmerkmal(e)) mit der Korrekturdatenbank keinen Treffer ergibt. Ein Grund hierfür kann sein, dass das Kennzeichen zum ersten Mal erfasst und von der Texterkennung falsch erkannt wurde. In diesem Fall liegt noch kein Eintrag in der Korrekturdatenbank vor. Ein zweiter Fall für eine benutzergesteuerte Weiterbearbeitung liegt vor, wenn der Abgleich des korrigierten OCR-Kennzeichens mit der Buchungsdatenbank negativ ist. In diesen Fällen kann ein Versuch von Mautbetrug oder ein technischer Defekt vorliegen.

Bei der benutzergestützten Weiterbearbeitung (oder Kontrolle) prüft ein Benutzer die vorliegenden Daten. Der Benutzer vergleicht das auf dem Foto abgebildete Kennzeichen mit dem OCR-Kennzeichen. Falls die Texterkennung korrekt ist, also das OCR-Kennzeichen dem auf dem Foto abgebildeten Kennzeichen entspricht, liegt unter Umständen ein Fall von Mautprellung oder eine technische Störung vor. Der Benutzer leitet dann die weiteren Schritte ein. Dieser Fall ist nicht Gegenstand der Patentanmeldung und wird nicht weiter betrachtet.

Wenn der Benutzer feststellt, dass die Texterkennung des Kennzeichens nicht erfolgreich war, es also Unterschiede zwischen dem Kennzeichen auf dem Foto und dem OCR-Kennzeichen gibt, korrigiert der Benutzer das OCR-Kennzeichen. Ein Beispiel für einen möglichen Fehler der Texterkennung ist, dass das Kennzeichen "B TC 123" als "B TO 123" erkannt wird, also das "C" fälschlicherweise als "O" erkannt wird. Das korrigierte OCR-Kennzeichen kann anschließend mit der Buchungsdatenbank abgeglichen werden.

Der Benutzer erstellt des Weiteren eine Korrekturanweisung für das Kennzeichen. Der Hashwert zu dem (falsch erkannten) OCR-Kennzeichen wird zusammen mit wenigstens einer Korrekturanweisung (im obigen Beispiel: ersetze "O" durch "C" oder ersetze das Zeichen an Position 4 durch "C" (Leerzeichen werden mitgezählt)) in einer Korrekturdatenbank gespeichert. Es wird also nicht das Kennzeichen selbst gespeichert, was datenschutzrechtlich problematisch sein könnte, sondern nur dessen Hashwert, aus welchem sich das Kennzeichen nicht rekonstruieren lässt. Bei einer späteren Kontrolle des Kennzeichens kann dann eine automatische Korrektur des OCR-Kennzeichens gemäß der hinterlegten Korrekturanweisung ausgeführt werden, ohne dass der Benutzer nochmals manuell eingreifen muss.

In einer anderen Variante der benutzergestützten Weiterbearbeitung kann das Foto mit dem Kennzeichen zusammen mit dem OCR-Kennzeichen und einem Fahrzeugmerkmal (oder mehreren Fahrzeugmerkmalen) als Fehlerdatensatz an eine Fehlerdatenbank in einen Datenspeicher eines Fehlerbearbeitungssystems übermittelt werden. Der Benutzer kann mit Bedienungsmitteln des Fehlerbearbeitungssystems zur visuellen Darstellung des Fehlerdatensatzes mittels einer Anzeigevorrichtung des Fehlerbearbeitungssystems zugreifen und anhand der Bedienungsmittel einem Fehlerdatensatz nach visueller Prüfung des Fehlerdatensatzes ein korrektes Kennzeichen in Textform ("Text-Kennzeichen") als weiteres Fehlerdatenelement hinzufügen kann. Ein Prozessor des Fehlerbearbeitungssystems kann ausgebildet sein, bei Empfang eines Text-Kennzeichens in der Fehlerdatenbank unter Vergleich des Text-Kennzeichens mit dem OCR-Kennzeichen eine Korrekturanweisung (oder mehrere Korrekturanweisungen) zu erzeugen, die beschreibt, wie aus dem OCR-Kennzeichen ein korrigiertes OCR-Kennzeichen zu erzeugen ist, das mit dem Text-Kennzeichen übereinstimmt, falls das Text-Kennzeichen und das OCR-Kennzeichen voneinander verschieden sind, oder eine Korrektheitsbestätigung zu generieren, falls das Text- Kennzeichen und das OCR-Kennzeichen identisch sind. Anschließend kann der Prozessor des Fehlerbearbeitungssystems einen Korrekturdatensatz erzeugen, der den Hashwert des (falschen oder korrekten) OCR-Kennzeichen, die Korrekturanweisung oder die Korrektheitsbestätigung sowie das Fahrzeugmerkmal (bzw. die Fahrzeugmerkmale) aufweist, und die Speicherung desselben in der Korrekturdatenbank veranlassen.

## Patentansprüche

1. Computerimplementiertes Verfahren zur Korrektur eines Kennzeichens eines Kraftfahrzeugs, folgende Schritte umfassend:
a) Erfassen (10) eines Kennzeichens,
b) Erzeugen (20) eines OCR-Kennzeichens aus dem erfassten Kennzeichen mittels Texterkennung,
c) Durchführen eines Referenztests für das erzeugte OCR-Kennzeichen, wobei als Referenztest das OCR-Kennzeichen mit einer Buchungsdatenbank abgeglichen wird (30), wobei die Buchungsdatenbank gespeicherte Kennzeichen enthält, die jeweils Fahrzeugen zugeordnet sind, welche eine Mautgebühr für eine mautpflichtige Strecke bereits gezahlt haben oder eine mautpflichtige Strecke gebucht haben, und wobei der Referenztest negativ ausfällt, wenn der Abgleich negativ ist, wobei die folgenden Schritte nur ausgeführt werden, wenn der Referenztest negativ ausfällt,
d) Bilden (40) eines Hashwerts ausgehend von dem erzeugten OCR-Kennzeichen,
e) Abgleichen (50) des gebildeten Hashwerts mit einer Korrekturdatenbank, wobei die Korrekturdatenbank gespeicherte Hashwerte von Kennzeichen und Korrekturanweisungen umfasst, wobei jedem gespeicherten Hashwert wenigstens eine Korrekturanweisung zugeordnet ist, und
f) wenn der gebildete Hashwert einem in der Korrekturdatenbank gespeicherten Hashwert entspricht, Anwenden (60) der wenigstens einen dem gespeicherten Hashwert zugeordneten Korrekturanweisung auf das OCR-Kennzeichen und Erzeugen eines korrigierten OCR-Kennzeichens.

2. Verfahren nach Anspruch 1, wobei das OCR-Kennzeichen ein oder mehrere Zeichen umfasst und wobei die wenigstens eine Korrekturanweisung eine der folgenden Formen hat:
- ersetze das Zeichen "X" durch das Zeichen "Y",
- ersetze das Zeichen an der Position n durch das Zeichen "Y" oder
- ersetze das Zeichen "X" an der Position n durch das Zeichen "Y",
wobei "X" und "Y" einzelne Zeichen eines Zeichensatzes sind und wobei n eine natürliche Zahl ist und die Position des Zeichens in dem OCR-Kennzeichen angibt.

3. Verfahren nach Anspruch 1 oder 2, weiter umfassend Erfassen (210) wenigstens eines Fahrzeugmerkmals, wobei in der Korrekturdatenbank jedem gespeicherten Hashwert eine Information zu wenigstens einem Fahrzeugmerkmal zugeordnet ist, und wobei für den Abgleich mit der Korrekturdatenbank der erzeugte Hashwert und das wenigstens eine erfasste Fahrzeugmerkmal mit den in der Korrekturdatenbank gespeicherten Hashwerten und der jeweils zugeordneten Information zu dem wenigstens einen Fahrzeugmerkmal verglichen wird.

4. Verfahren nach Anspruch 3, wobei das wenigstens eine Fahrzeugmerkmal ausgewählt ist aus der folgenden Gruppe: Fahrzeugtyp, Anzahl der Achsen einer Zugmaschine, Fahrzeughöhe, Fahrzeugbreite, Fahrzeuglänge, Farbe des Fahrzeugs und Position des Kennzeichens am Fahrzeug.

5. System zur Korrektur eines Kennzeichens eines Kraftfahrzeugs, wobei das System eingerichtet ist, folgende Schritte auszuführen:
a) Erfassen (10) eines Kennzeichens,
b) Erzeugen (20) eines OCR-Kennzeichens aus dem erfassten Kennzeichen mittels Texterkennung,
c) Durchführen eines Referenztests für das erzeugte OCR-Kennzeichen, wobei als Referenztest das OCR-Kennzeichen mit einer Buchungsdatenbank abgeglichen wird (30), wobei die Buchungsdatenbank gespeicherte Kennzeichen enthält, die jeweils Fahrzeugen zugeordnet sind, welche eine Mautgebühr für eine mautpflichtige Strecke bereits gezahlt haben oder eine mautpflichtige Strecke gebucht haben, und wobei der Referenztest negativ ausfällt, wenn der Abgleich negativ ist, wobei die folgenden Schritte nur ausgeführt werden, wenn der Referenztest negativ ausfällt,
d) Bilden (40) eines Hashwerts ausgehend von dem erzeugten OCR-Kennzeichen,
e) Abgleichen (50) des gebildeten Hashwerts mit einer Korrekturdatenbank, wobei die Korrekturdatenbank gespeicherte Hashwerte von Kennzeichen und Korrekturanweisungen umfasst, wobei jedem gespeicherten Hashwert wenigstens eine Korrekturanweisung zugeordnet ist, und
f) wenn der gebildete Hashwert einem in der Korrekturdatenbank gespeicherten Hashwert entspricht, Anwenden (60) der wenigstens einen dem gespeicherten Hashwert zugeordneten Korrekturanweisung auf das OCR-Kennzeichen und Erzeugen eines korrigierten OCR-Kennzeichens.

## Claims

1. A computer-implemented method for correcting a licence plate of a motor vehicle, comprising the following steps:
a) capturing (10) a licence plate,
b) generating (20) an OCR licence plate from the captured licence plate by means of text recognition,
c) performing a reference test for the generated OCR licence plate, wherein the reference test involves comparing the OCR licence plate with a booking database (30), the booking database containing stored licence plates, each associated with vehicles that have already paid a toll fee for a toll road or have booked a toll road, and wherein the reference test is negative if the comparison is negative, with the following steps being executed only if the reference test is negative,
d) creating (40) a hash value based on the OCR licence plate generated,
e) comparing (50) the created hash value with a correction database, wherein the correction database contains stored hash values of licence plates and correction instructions, with at least one correction instruction assigned to each stored hash value, and
f) if the created hash value matches a hash value stored in the correction database, applying (60) the at least one correction instruction assigned to the stored hash value to the OCR licence plate and generating a corrected OCR licence plate.

2. The method according to claim 1, wherein the OCR licence plate comprises one or more characters and wherein the at least one correction instruction has one of the following forms:
- replace character **"X"** with character **"Y",**
- replace the character at position n with character **"Y" or**
- replace character "X" at position n with character "Y",
wherein "X" and "Y" are individual characters of a character set and wherein n is a natural number indicating the position of the character in the OCR licence plate.

3. The method according to claim 1 or 2, further comprising capturing (210) at least one vehicle characteristic, wherein in the correction database each stored hash value is associated with information on at least one vehicle characteristic and wherein for comparison with the correction database, the generated hash value and the at least one captured vehicle characteristic are compared with the hash values stored in the correction database and the respective associated information on at least one vehicle characteristic.

4. The method according to claim 3, wherein the at least one vehicle characteristic is selected from the following group: vehicle type, number of axles of a towing vehicle, vehicle height, vehicle width, vehicle length, colour of the vehicle and position of the licence plate on the vehicle.

5. A system for correcting a licence plate of a motor vehicle, wherein the system is configured to perform the following steps:
a) capturing (10) a licence plate,
b) generating (20) an OCR licence plate from the captured licence plate by means of text recognition,
c) performing a reference test for the generated OCR licence plate, wherein the reference test involves comparing the OCR licence plate with a booking database (30), the booking database containing stored licence plates, each associated with vehicles that have already paid a toll fee for a toll road or have booked a toll road, and wherein the reference test is negative if the comparison is negative, with the following steps being executed only if the reference test is negative,
d) creating (40) a hash value based on the OCR licence plate generated,
e) comparing (50) the created hash value with a correction database, wherein the correction database contains stored hash values of licence plates and correction instructions, with at least one correction instruction assigned to each stored hash value, and
f) if the created hash value matches a hash value stored in the correction database, applying (60) the at least one correction instruction assigned to the stored hash value to the OCR licence plate and generating a corrected OCR licence plate.

## Revendications

1. Procédé mis en œuvre par ordinateur pour la correction d'une identification d'un véhicule automobile, comprenant les étapes suivantes :
a) saisie (10) d'une identification,
b) production (20) d'une indentification par Reconnaissance Optique des Caractères (ROC) à partir de l'identification saisie au moyen de la reconnaissance de texte,
c) exécution d'un test de référence pour l'identification par ROC produite, sachant que l'identification par ROC est comparée en tant que teste de référence à une banque de données comptables (30), sachant que la banque de données comptables contient des identifications mémorisées, qui sont attribuées respectivement à des véhicules, lesquels ont déjà payé un péage pour un trajet soumis à péage ou ont comptabilisé un parcours soumis à péage et sachant que le test de référence s'avère négatif, lorsque la comparaison est négative, sachant que les étapes suivantes ne sont exécutées que lorsque le test de référence s'avère négatif,
d) création (40) d'une valeur de hachage en partant de l'identification par ROC produite,
e) comparaison (50) de la valeur de hachage mémorisée à une banque de données de correction, sachant que la banque de données de correction comprend des valeurs de hachage mémorisées d'identification et d'instructions de correction, sachant qu'au moins une instruction de correction est attribuée à chaque valeur de hachage mémorisée, et
f) lorsque la valeur de hachage créée correspond à une valeur de hachage mémorisée dans la banque de données de correction, utilisation (60) d'au moins une instruction de correction attribuée à la valeur de hachage mémorisée sur l'identification par ROC et production d'une identification par ROC corrigée.

2. Procédé selon la revendication 1, sachant que l'identification par ROC comprend un ou plusieurs signes et sachant qu'au moins une instruction de correction possède une des formes suivantes :
- remplacement du signe « X » par le signe « Y »,
- remplacement du signe à la position n par le signe « Y », ou
- remplacement du signe « X » à la position n par le signe « Y »,
sachant que « X » et « Y » sont des signes individuels d'un ensemble de signes et sachant que n est un nombre naturel et indique la position du signe dans l'identification par ROC.

3. Procédé selon la revendication 1 ou 2, comprenant en plus la saisie (210) d'au moins une caractéristique de véhicule, sachant que dans la banque de données de correction une information pour au moins une caractéristique de véhicule est attribuée à chaque valeur de hachage mémorisée et sachant que pour la comparaison à la banque de données de correction, la valeur de hachage produite et au moins une caractéristique de véhicule saisie est comparée aux valeurs de hachage mémorisées dans la banque de données de correction et l'information respectivement attribuée est comparée à au moins une caractéristique de véhicule.

4. Procédé selon la revendication 3, sachant qu'au moins une caractéristique de véhicule est sélectionnée à partir du groupe suivant : type de véhicule, nombre d'essieux d'un véhicule tracteur, hauteur de véhicule, largeur de véhicule, longueur de véhicule, couleur du véhicule et position de l'identification sur le véhicule.

5. Système de correction d'une identification d'un véhicule automobile, sachant que le système est agencé pour exécuter les étapes suivantes :
a) saisie (10) d'une identification,
b) production (20) d'une indentification par Reconnaissance Optique des Caractères (ROC) à partir de l'identification saisie au moyen d'une reconnaissance de texte,
c) exécution d'un test de référence pour l'identification par Roc produite, sachant que l'identification par ROC est comparée en tant que teste de référence à une banque de données comptables (30), sachant que la banque de données comptables contient des identifications mémorisées, qui sont attribuées respectivement à des véhicules, lesquels ont déjà payé un péage pour un trajet soumis à péage ou ont réservé un parcours soumis à péage et sachant que le test de référence s'évère négatif, lorsque la comparaison est négative, sachant que les étapes suivantes ne sont exécutées que lorsque le test de référence s'avère négatif,
d) création (40) d'une valeur de hachage en partant de l'identification par ROC produite,
e) comparaison (50) de la valeur de hachage mémorisée à une banque de données de correction, sachant que la banque de données de correction comprend des valeurs de hachage d'identification et des instructions de correction, sachant qu'au moins une instruction de correction est attribuée à chaque valeur de hachage mémorisée, et
f) lorsque la valeur de hachage créée correspond à une valeur de hachage mémorisée dans la banque de données de correction, utilisation (60) d'au moins une instruction de correction attribuée à la valeur de hachage mémorisée sur l'identification par ROC et production d'une identification par ROC corrigée.
